# EUROPEAN PATENT APPLICATION

(11) **EP 4 815 484 A1**
(43) Date of publication of application: **30.09.2026**
(21) Application number: 24894549.5
(22) Date of filing: 18.11.2024
(51) Int. Cl.: H04N 23/68, H04N 23/54, H04N 23/55, G03B 5/06, G03B 5/04, H02K 41/035

(54) **CAMERA DEVICE AND OPTICAL APPARATUS**

(30) Priority: 21.11.2023 KR 20230162064
(71) Applicant: LG Innotek Co., Ltd., Seoul 07796 (KR)
(72) Inventor: LEE, Sung Guk, Seoul 07796 (KR)
(74) Representative: DREISS Patentanwälte PartG mbB
(86) International application number: PCT/KR2024/018179
(87) International publication number: WO 2025/110656

(57) **Abstract**

The present embodiment relates to a camera device comprising: a base; a first substrate disposed on the base; an image sensor disposed on the first substrate; a lens disposed on the image sensor; a first driving unit which moves the lens in the optical axis direction; a second driving unit which tilts the image sensor and the lens together about a first axis; and a third driving unit which tilts the image sensor and the lens together about a second axis perpendicular to the first axis, wherein the first substrate includes a body portion on which the image sensor is disposed and an extension portion externally extending from the body portion, the extension portion of the first substrate comprises a first portion and a second portion disposed to face each other, and the first portion of the first substrate and the second portion of the first substrate overlap each other in a first direction perpendicular to the optical axis direction.

## Description

### [Technical Field]

The present embodiment relates to a camera device and an optical apparatus.

### [Background Art]

A camera device is an apparatus that captures a subject as a photograph or a video, and is being mounted on optical instruments such as smartphones, drones, vehicles, and the like.

An image stabilization function, which prevents a phenomenon in which a focus is shaken by a user's handshake, is being applied to the camera device.

However, in a conventional lens driving device, the image stabilization function is performed by x-axis direction shift compensation and y-axis direction shift compensation, that is, 2-axis compensation.

However, recently, an image stabilization function with improved performance is being required.

(Patent Literature 1) KR 10-2015-0118005 A

### [Detailed Description of the Invention]

### [Technical Subject]

The present embodiment is intended to provide a camera device equipped with an image stabilization function with improved performance through 4-axis compensation.

More specifically, it is intended to provide a camera device that performs an image stabilization function through x-axis direction shift compensation, y-axis direction shift compensation, yaw direction tilting compensation, and pitch direction tilting compensation.

Furthermore, it is intended to provide a camera device in which a substrate that movably supports an image sensor is formed so as not to interfere with a driving force.

In addition, it is intended to provide a camera device that performs pressing of a ball, which guides tilting of the image sensor, through a repulsive force.

In addition, it is intended to provide a camera device in which a height in the optical axis direction is minimized.

### [Technical Solution]

A camera device according to the present embodiment comprises: a base; a first substrate disposed on the base; an image sensor disposed on the first substrate; a lens disposed on the image sensor; a first driving unit which moves the lens in the optical axis direction; a second driving unit which tilts the image sensor and the lens together about a first axis; and a third driving unit which tilts the image sensor and the lens together about a second axis perpendicular to the first axis, wherein the first substrate comprises a body portion on which the image sensor is disposed and an extension portion externally extending from the body portion, wherein the extension portion of the first substrate comprises a first portion and a second portion disposed to face each other, and wherein the first portion of the first substrate and the second portion of the first substrate may overlap each other in a first direction perpendicular to the optical axis direction.

The extension portion of the first substrate comprises a third portion and a fourth portion disposed to face each other, and the third portion of the first substrate and the fourth portion of the first substrate may overlap each other in the first direction.

The first to fourth portions of the first substrate may overlap each other in the first direction.

At least a portion of each of the first to fourth portions of the first substrate may be disposed parallel to the optical axis direction.

The extension portion of the first substrate comprises a first bent portion connecting an upper end of the first portion and an upper end of the second portion, and a first stiffener having a corresponding shape may be disposed on the first bent portion of the first substrate.

The extension portion of the first substrate comprises: a second bent portion connecting one side surface of the third portion and a side surface of the second portion; and a third bent portion connecting the other side surface of the third portion and a side surface of the fourth portion, wherein a second stiffener having a corresponding shape is disposed on the second bent portion of the first substrate, and wherein a third stiffener having a corresponding shape may be disposed on the third bent portion of the first substrate.

The base may comprise a first protrusion of which at least a portion is disposed between the first portion of the first substrate and the second portion of the first substrate.

The base may comprise a second protrusion of which at least a portion is disposed between the second portion of the first substrate and the third portion of the first substrate and a third protrusion disposed between the third portion of the first substrate and the fourth portion of the first substrate.

The first substrate comprises an outer side portion on which a connector connected to the outside is disposed, and the extension portion of the first substrate may connect the body portion of the first substrate and the outer side portion of the first substrate.

The camera device comprises: a sensor base disposed on the base and coupled to the body portion of the first substrate; a first magnet disposed on the base; and a second magnet disposed on the sensor base and disposed under the first magnet, wherein the first magnet and the second magnet may be disposed such that the same poles face each other.

A first surface of the first magnet and a first surface of the second magnet are disposed to face each other, and an area of the first surface of the second magnet may be greater than an area of the first surface of the first magnet.

The camera device may comprise: a fourth driving unit which moves the lens in a first direction perpendicular to the optical axis direction; and a fifth driving unit which moves the lens in a second direction perpendicular to the optical axis direction and the first direction.

The fourth driving unit comprises a fourth coil disposed on the base, the base comprises a protrusion disposed on an upper side of the fourth coil, and when viewed from above, an edge of an upper surface of the fourth coil is covered by the protrusion of the base, and a remaining portion of the upper surface of the fourth coil may be opened without being covered by the base.

The fifth driving unit comprises a fifth coil disposed on the base, the fifth coil comprises two coils spaced apart from each other, and when viewed from above, upper surfaces of the two coils may be opened without being covered by the base.

An optical apparatus according to the present embodiment may comprise: a main body; a camera device disposed on the main body; and a display which is disposed on the main body and outputs at least one of a video and an image captured by the camera device.

### [Advantageous Effects]

Through the present embodiment, an image stabilization function with improved performance can be provided through 4-axis compensation.

More specifically, an image stabilization function with improved performance compared to conventional 2-axis compensation can be provided through x-axis direction shift compensation, y-axis direction shift compensation, yaw direction tilting compensation, and pitch direction tilting compensation.

Therefore, a clearer photograph or video can be obtained despite a handshake of a user of the optical apparatus.

In addition, a substrate that movably supports an image sensor is formed so as not to interfere with a driving force, so that sizes of a magnet and a coil that drive the image sensor can be minimized.

In addition, a pressed state of a ball that guides tilting of the image sensor can be maintained by a repulsive force between magnets.

In addition, a height of the camera device in the optical axis direction can be minimized by opening an injection-molded product on an upper side of a coil.

### [Brief Description of Drawings]

FIG. 1 is a perspective view of a camera device according to the present embodiment.
FIG. 2 is a cross-sectional view taken along line A-A of FIG. 1.
FIG. 3 is a cross-sectional view taken along line B-B of FIG. 1.
FIG. 4 is a cross-sectional view taken along line C-C of FIG. 1.
FIG. 5 is a cross-sectional view taken along line D-D of FIG. 1.
FIG. 6 is a cross-sectional view of the camera device according to the present embodiment, cut in a direction perpendicular to the optical axis and viewed from above.
FIG. 7 is an exploded perspective view of the camera device according to the present embodiment.
FIGS. 8 and 9 are exploded perspective views viewed from a direction different from that of FIG. 7.
FIG. 10 is a perspective view showing a state in which a cover is omitted from the camera device according to the present embodiment.
FIG. 11 is a perspective view showing a state in which a base is omitted from FIG. 10.
FIG. 12 is a perspective view showing a state in which a substrate is omitted from FIG. 11.
FIG. 13 is a perspective view showing a state in which a carrier is omitted from FIG. 12.
FIG. 14 is a perspective view showing a state in which a housing is omitted from FIG. 13.
FIG. 15 is a perspective view showing a state in which a sensor base, a frame, and a moving plate are omitted from FIG. 14.
FIG. 16 is a perspective view illustrating an x-axis direction OIS driving support structure of a camera device according to the present embodiment.
FIG. 17 is a perspective view illustrating a y-axis direction OIS driving support structure of a camera device according to the present embodiment.
FIG. 18 is a perspective view illustrating a sensor substrate assembly and a related configuration of a camera device according to the present embodiment.
FIG. 19 is a perspective view illustrating a fixed substrate and a related configuration of a camera device according to the present embodiment.
FIG. 20 is a perspective view of FIG. 19 viewed from a different direction.
FIG. 21 is a bottom perspective view showing a state in which a cover and a fixed substrate are omitted.
FIG. 22 is a bottom perspective view showing a state in which a fixed unit and a related configuration are omitted from FIG. 21.
FIG. 23 is a bottom perspective view showing a state in which a moving plate and a related configuration are omitted from FIG. 22.
FIG. 24 is a bottom perspective view illustrating a shape of a bent portion of a sensor substrate and a related configuration of a camera device according to the present embodiment.
FIG. 25 is a perspective view illustrating an extension portion of a sensor substrate and a related configuration of a camera device according to the present embodiment.
FIG. 26 is a bottom perspective view illustrating an extension portion of a sensor substrate and a related configuration of a camera device according to the present embodiment.
FIG. 27 is a perspective view of a camera device according to the present embodiment.
FIG. 28a is a cross-sectional view illustrating an arrangement structure of an extension portion of a sensor substrate and a protrusion of a base of a camera device according to the present embodiment.
FIG. 28b (a) is a conceptual diagram illustrating an extension portion of a sensor substrate according to a first modified embodiment, and FIG. 28b (b) is a conceptual diagram illustrating an extension portion of a sensor substrate according to a second modified embodiment.
FIG. 29 is a cross-sectional perspective view illustrating a repulsive force generation structure between magnets according to the present embodiment.
FIG. 30 is a side view illustrating an upper surface open structure of an OIS coil according to the present embodiment.
FIG. 31 is a view for explaining auto-focus driving of a camera device according to the present embodiment.
FIG. 32 is a view for explaining image stabilization driving through x-axis direction shift compensation and y-axis direction shift compensation of a camera device according to the present embodiment.
FIG. 33 is a view for explaining image stabilization driving through yaw direction tilting compensation of a camera device according to the present embodiment.
FIG. 34 is a view for explaining image stabilization driving through pitch direction tilting compensation of a camera device according to the present embodiment.
FIG. 35 is a perspective view of an optical apparatus according to the present embodiment.
FIG. 36 is a perspective view of an optical apparatus according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction with respect to one component may be comprised.

The 'optical axis direction' used hereinafter is defined as the optical axis direction of the lens and/or the image sensor coupled to the lens driving device.

A 'vertical direction' used hereinafter may be a direction parallel to or the same as the optical axis direction. The vertical direction may correspond to a 'z-axis direction'. A 'horizontal direction' used hereinafter may be a direction perpendicular to the vertical direction. That is, the horizontal direction may be a direction perpendicular to the optical axis. Accordingly, the horizontal direction may comprise an 'x-axis direction' and a 'y-axis direction'.

Hereinafter, one among the "x-axis direction" and the "y-axis direction" is referred to as a "first direction", and another one may be referred to as a "second direction".

An 'auto-focus (AF) function' used hereinafter is defined as a function of automatically focusing on a subject by moving a lens in the optical axis direction according to a distance of the subject to adjust a distance from an image sensor so that a clear image of the subject can be obtained on the image sensor. In addition, 'closed-loop auto focus (CLAF) control' is defined as feedback-controlling a position of the lens in real time by sensing a distance between the image sensor and the lens in order to improve accuracy of focus adjustment.

The 'optical image stabilization (OIS) function' used hereinafter is defined as a function that moves or tilts the lens in a direction perpendicular to the optical axis to offset handshake in order to prevent an image or video from shaking due to the user's handshake. In addition, 'closed-loop auto focus (CLAF) control' is defined as detecting the position of the lens with respect to the image sensor and controlling the feedback of the lens position in real time in order to improve the accuracy of handshake correction.

Hereinafter, one among the "AF driving unit **400**", the "OIS-x driving unit **510**", the "OIS-y driving unit **520**", the "OIS-yaw driving unit **530**", and the "OIS-pitch driving unit **540**" is referred to as a "first driving unit", another one is referred to as a "second driving unit", yet another one is referred to as a "third driving unit", still another one is referred to as a "fourth driving unit", and yet still another one may be referred to as a "fifth driving unit".

Hereinafter, one among the "AF magnet **410**", "OIS-x magnet **511**", "OIS-y magnet **521**", "OIS-yaw magnet **531**", "OIS-pitch magnet **541**", "first repulsive force magnet **740**", and "second repulsive force magnet **750**" is referred to as a "first magnet", another one is referred to as a "first magnet", another one as a "second magnet", yet another one is referred to as a "third magnet", still another one is referred to as a "fourth magnet", yet still another one is referred to as a "fifth magnet", yet still another one is referred to as a "fifth magnet", and still yet still another one may be referred to as a "seventh magnet".

Hereinafter, one among the "AF coil **420**", "OIS-x coil **512**", "OIS-y coil **522**", "OIS-yaw coil **532**" and "OIS-pitch coil **542**" is referred to as a "first coil", another one is referred to as a "second coil", yet another one is referred to as a "third coil", still another one is referred to as a "fourth coil", and yet still another may be referred to as a "fifth coil".

Hereinafter, one among the "AF guide ball **610**", "OIS-x guide ball **620**", "OIS-y guide ball **630**", "OIS-yaw guide ball **640**" and "OIS-pitch guide ball **650**" is referred to as a "first ball", another one is referred to as a "second ball", yet another one is referred to as a "third ball", still another one is referred to as a "fourth ball", and yet still another may be referred to as a "fifth ball".

Hereinafter, one among the "fixed substrate **130**", the "sensor substrate **210**", and the "side substrate **211a**" is referred to as a "first substrate", the other one is referred to as a "second substrate", and yet the other one may be referred to as a "third substrate".

Hereinafter, one among the "AF attractive force yoke **710**", "OIS-x attractive force yoke **720**", "OIS-y attractive force yoke **730**" and "first repulsive force magnet **740**" is referred to as a "first yoke", another one is referred to as a "second yoke", yet another one is referred to as a "third yoke", and still another one may be referred to as a "fourth yoke".

Hereinafter, one among the "housing **310**", the "sensor base **320**", the "frame **330**" and the "carrier **340**" is referred to as a "first carrier", another one is referred to as a "second carrier", yet another is referred to as a "third carrier" and still another one may be referred to as the "fourth carrier".

Hereinafter, one among the "first stiffener **231**", the "second stiffener **232**", the "third stiffener **233**", and the "fourth stiffener **234**" is referred to as a "first stiffener", another one is referred to as a "second stiffener", yet another one is referred to as a "third stiffener", and still another one may be referred to as a "fourth stiffener".

Hereinafter, one among the "first protrusion **112**", the "second protrusion **113**", and the "third protrusion **114**" is referred to as a "first protrusion", another one is referred to as a "second protrusion", and yet another one may be referred to as a "third protrusion".

Hereinafter, a configuration of a camera device according to the present embodiment will be described with reference to the drawings.

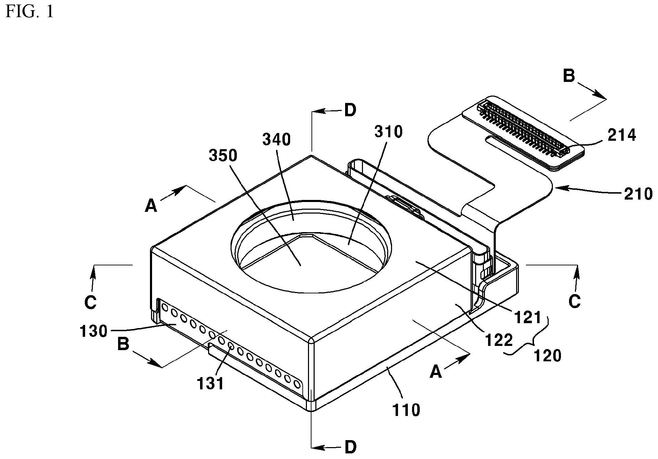

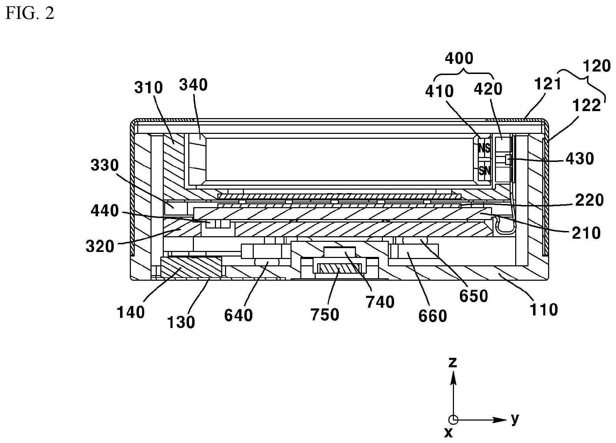

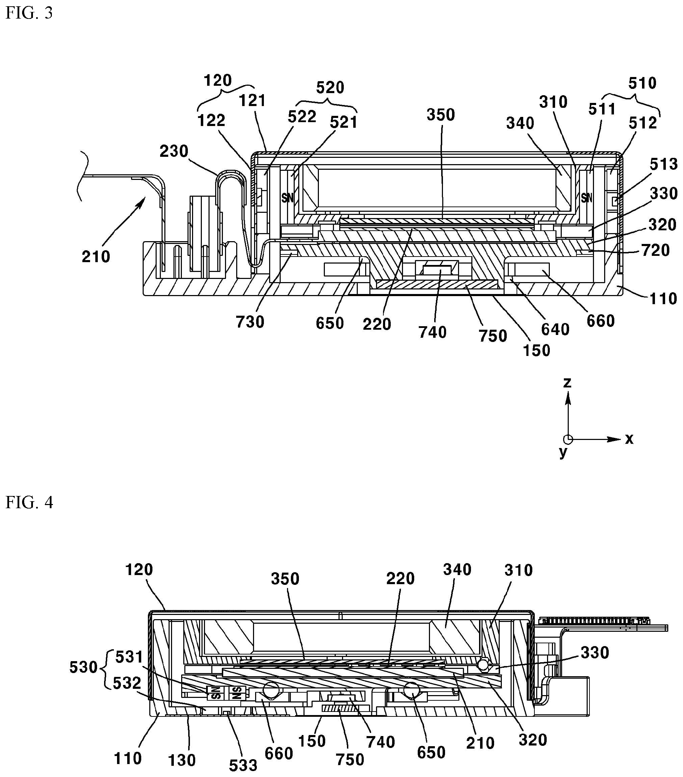

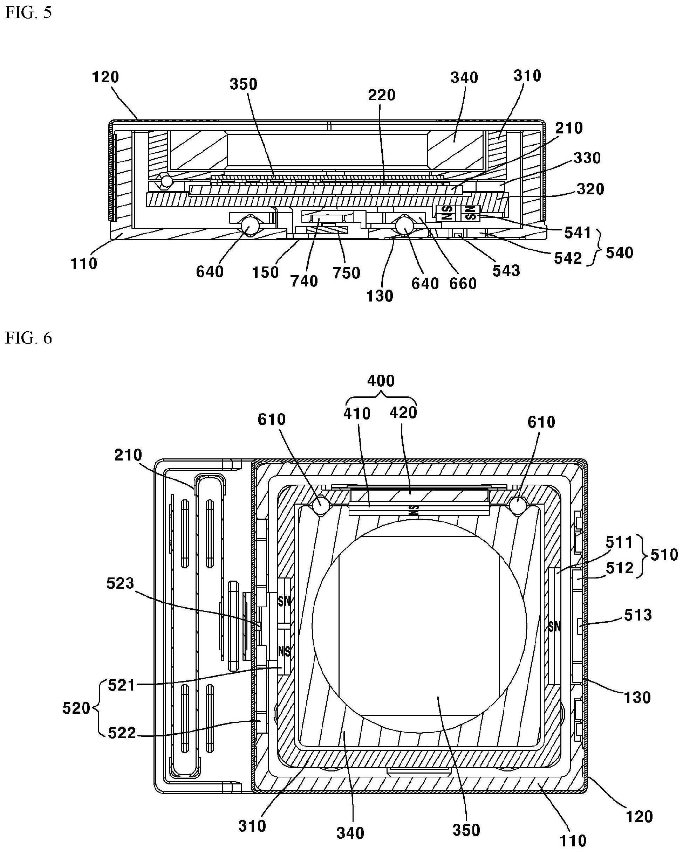

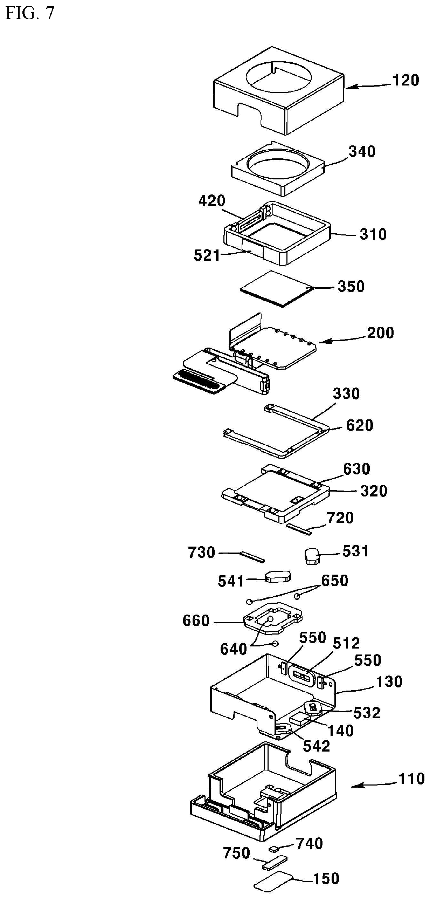

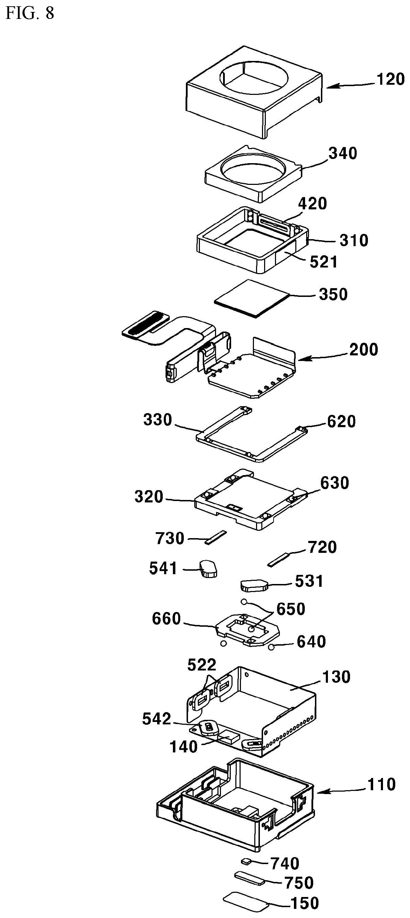

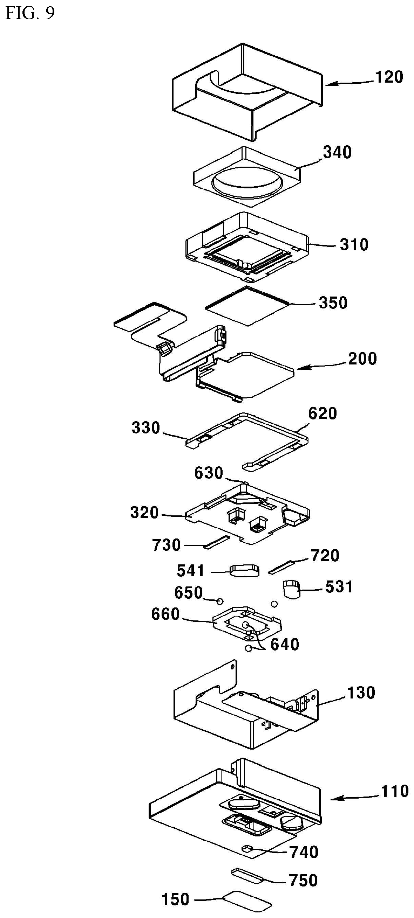

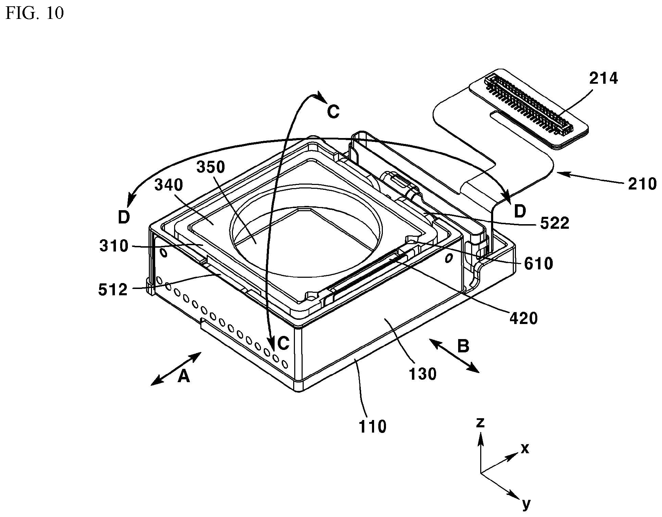

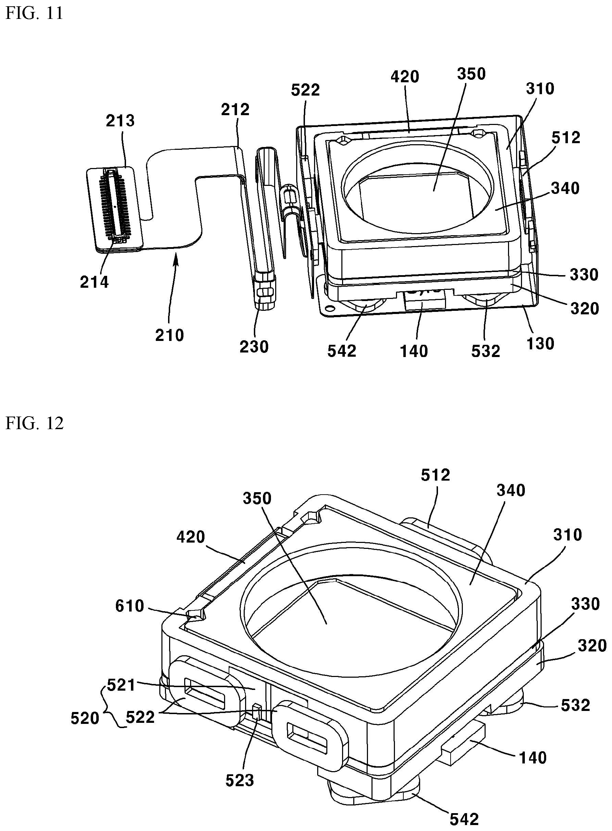

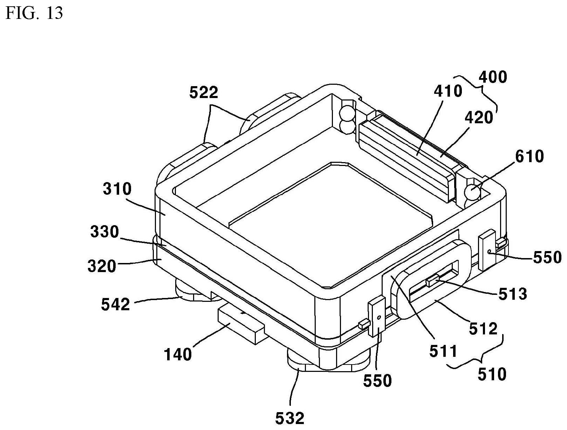

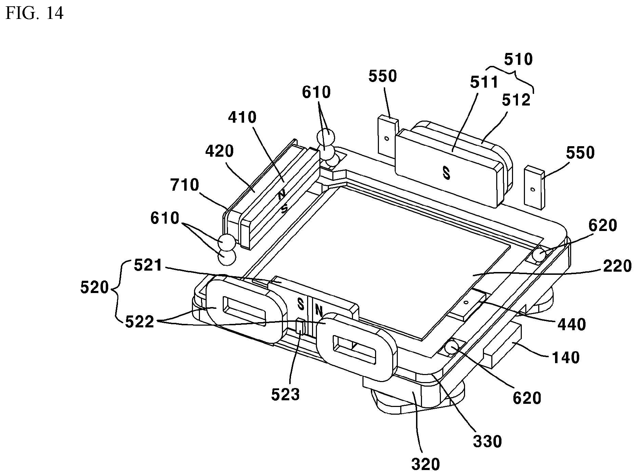

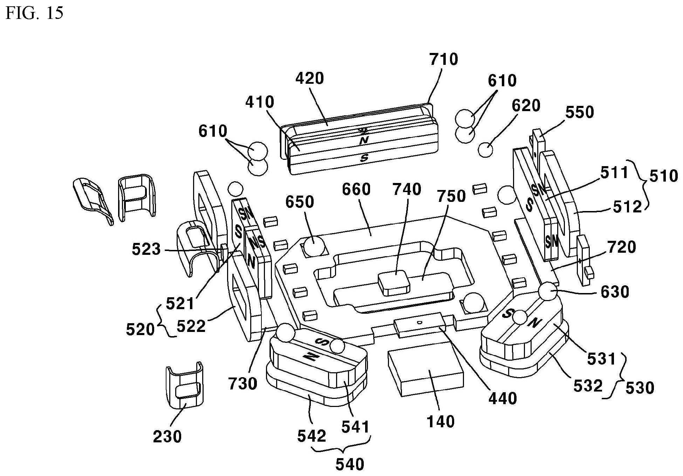

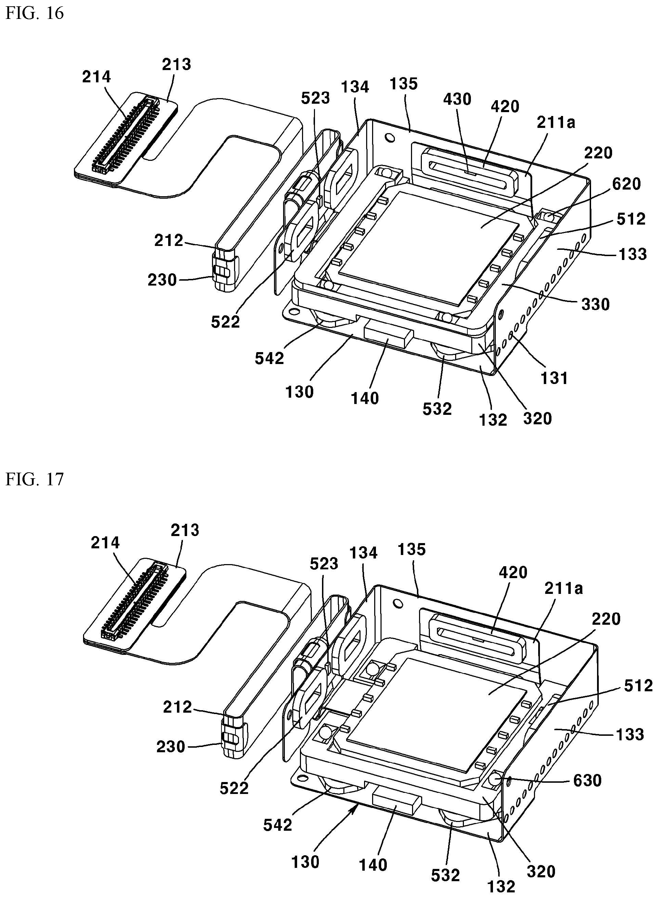

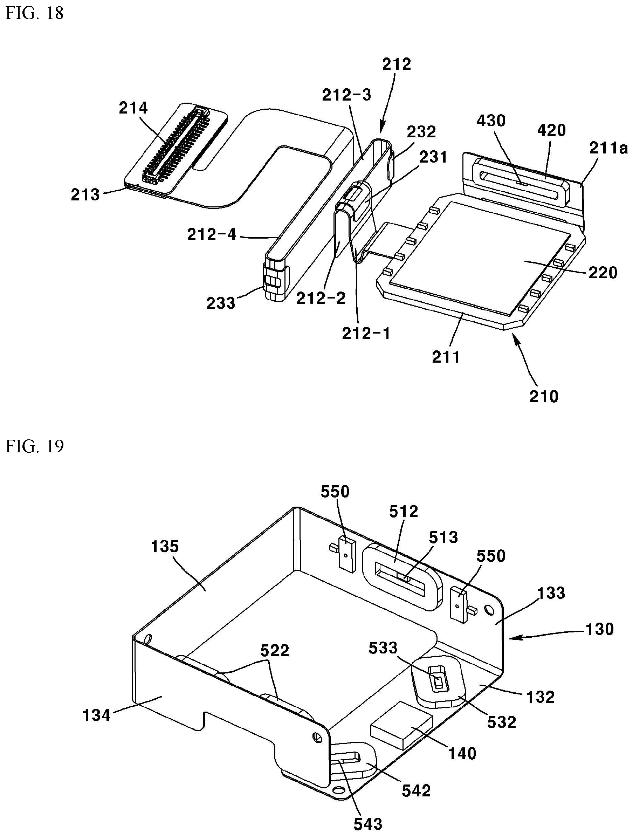

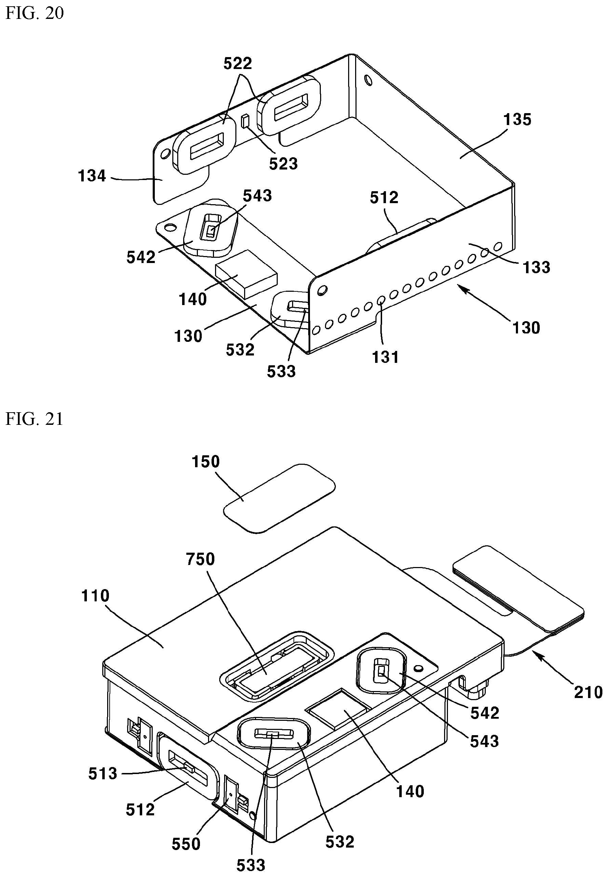

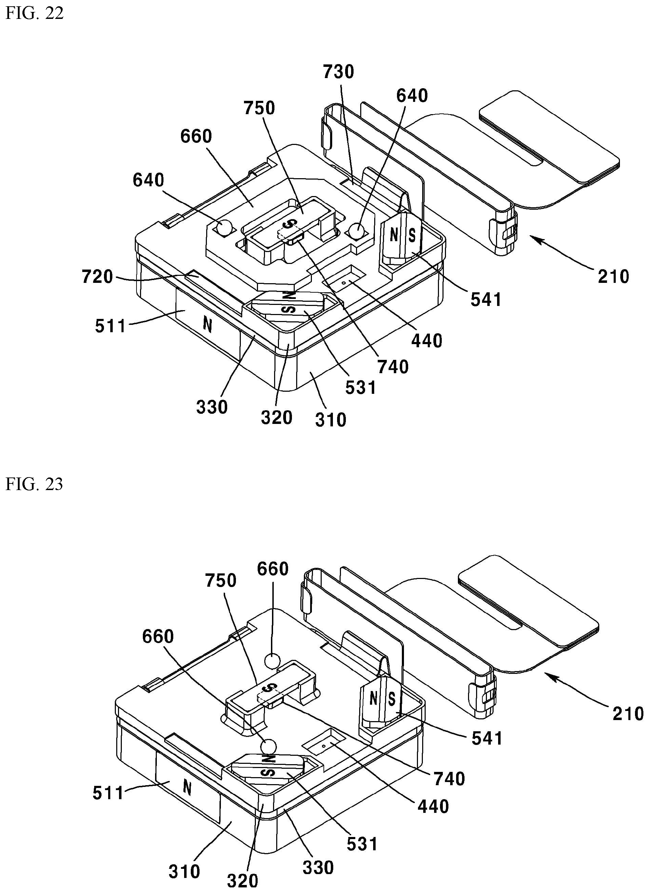

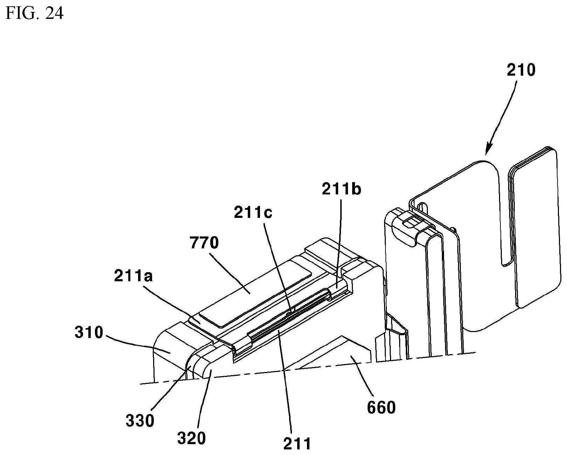

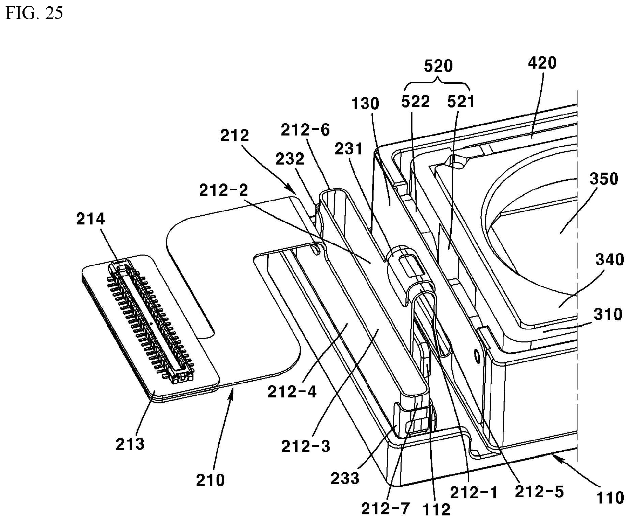

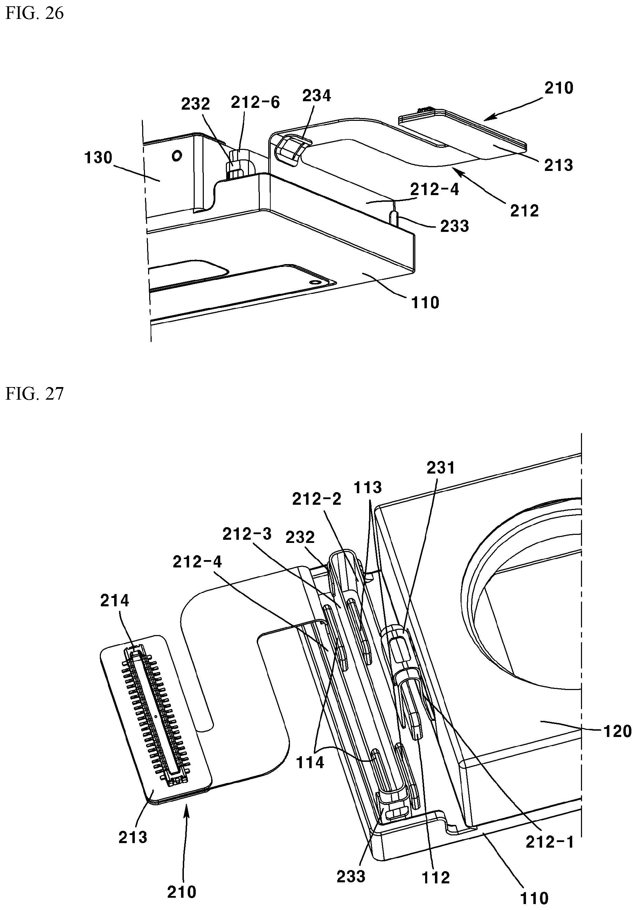

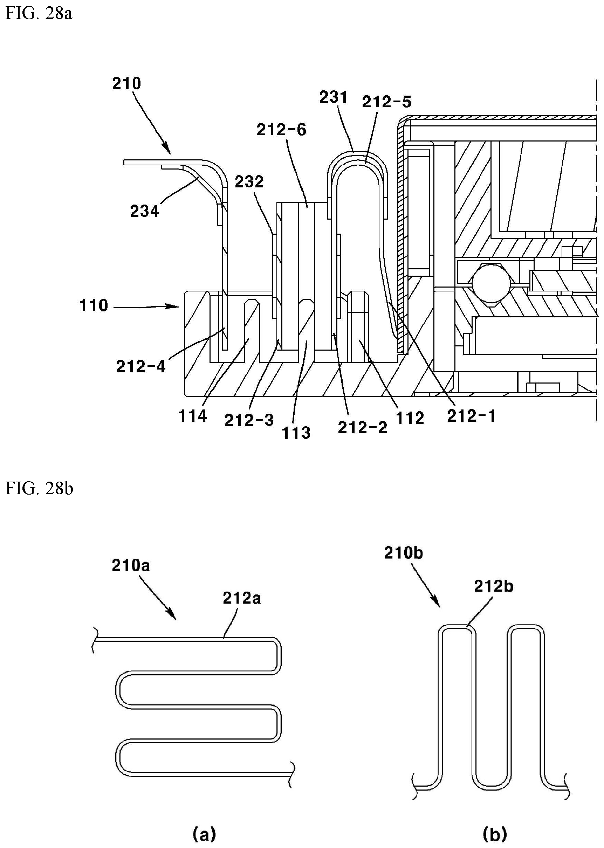

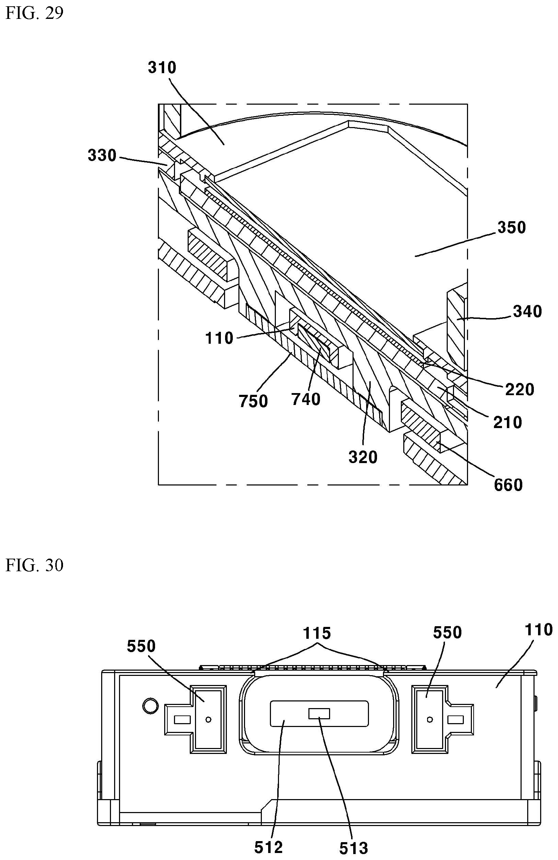

FIG. 1 is a perspective view of a camera device according to the present embodiment. FIG. 2 is a cross-sectional view taken along line A-A of FIG. 1. FIG. 3 is a cross-sectional view taken along line B-B of FIG. 1. FIG. 4 is a cross-sectional view taken along line C-C of FIG. 1. FIG. 5 is a cross-sectional view taken along line D-D of FIG. 1. FIG. 6 is a cross-sectional view of the camera device according to the present embodiment, cut in a direction perpendicular to an optical axis and viewed from above. FIG. 7 is an exploded perspective view of the camera device according to the present embodiment. FIGS. 8 and 9 are exploded perspective views viewed from a direction different from that of FIG. 7. FIG. 10 is a perspective view showing a state in which a cover is omitted from the camera device according to the present embodiment. FIG. 11 is a perspective view showing a state in which a base is omitted from FIG. 10. FIG. 12 is a perspective view showing a state in which a substrate is omitted from FIG. 11. FIG. 13 is a perspective view showing a state in which a carrier is omitted from FIG. 12. FIG. 14 is a perspective view showing a state in which a housing is omitted from FIG. 13. FIG. 15 is a perspective view showing a state in which a sensor base, a frame, and a moving plate are omitted from FIG. 14. FIG. 16 is a perspective view illustrating an x-axis direction OIS driving support structure of the camera device according to the present embodiment. FIG. 17 is a perspective view illustrating a y-axis direction OIS driving support structure of the camera device according to the present embodiment. FIG. 18 is a perspective view illustrating a sensor substrate assembly and a related configuration of the camera device according to the present embodiment. FIG. 19 is a perspective view illustrating a fixed substrate and a related configuration of the camera device according to the present embodiment. FIG. 20 is a perspective view of FIG. 19 viewed from a different direction. FIG. 21 is a bottom perspective view showing a state in which the cover and the fixed substrate are omitted. FIG. 22 is a bottom perspective view showing a state in which a fixed unit and a related configuration are omitted from FIG. 21. FIG. 23 is a bottom perspective view showing a state in which the moving plate and a related configuration are omitted from FIG. 22. FIG. 24 is a bottom perspective view illustrating a shape of a bent portion of a sensor substrate and a related configuration of the camera device according to the present embodiment. FIG. 25 is a perspective view illustrating an extension portion of the sensor substrate and a related configuration of the camera device according to the present embodiment. FIG. 26 is a bottom perspective view illustrating the extension portion of the sensor substrate and a related configuration of the camera device according to the present embodiment. FIG. 27 is a perspective view of the camera device according to the present embodiment. FIG. 28a is a cross-sectional view illustrating an arrangement structure of the extension portion of the sensor substrate and a protrusion of the base of the camera device according to the present embodiment. FIG. 28b (a) is a conceptual diagram illustrating an extension portion of a sensor substrate according to a first modified embodiment, and FIG. 28b (b) is a conceptual diagram illustrating an extension portion of a sensor substrate according to a second modified embodiment. FIG. 29 is a cross-sectional perspective view illustrating a repulsive force generation structure between magnets according to the present embodiment. FIG. 30 is a side view illustrating an upper surface open structure of an OIS coil according to the present embodiment.

A camera device may comprise a camera module. The camera device may comprise a lens driving device. The camera device may comprise a voice coil motor. The camera device may comprise an AF module. The camera device may comprise an OIS module.

The camera device may comprise a fixed unit. The fixed unit may be relatively fixed during movement of a moving unit. The fixed unit may support the moving unit. The fixed unit may accommodate the moving unit.

The camera device may comprise a base **110**. The fixed unit may comprise the base **110**. The base **110** may form a lower exterior of the camera device. The base **110** may be coupled to a cover **120**. The base **110** may be coupled to a side plate **122** of the cover **120**. The base **110** may support a carrier **340**. The base **110** may support a housing **310**. The base **110** may support a sensor base **320**.

The base **111** may comprise a groove **111**. The groove **111** may be a fixed substrate accommodation groove. The groove **111** may be formed on a lower surface of the base **110**. The groove **111** may be concavely formed on the lower surface of the base **110**. A lower plate portion **132** of a fixed substrate **130** may be disposed in the groove **111**. A depth of the groove **111** may correspond to a thickness of the lower plate portion **132** of the fixed substrate **130**.

The base **110** may comprise a bottom plate. The base **110** may comprise a side plate. The base **110** may comprise a plurality of side plates. The base **110** may comprise a side plate extending upward from the bottom plate. The base **110** may comprise four side plates. The base **110** may comprise a bottom plate, a first side plate and a second side plate disposed opposite to each other, and a third side plate and a fourth side plate disposed opposite to each other.

The base **110** may comprise a protrusion. The protrusion may protrude from an upper surface of the base **110**. At least a portion of the protrusion may be disposed between extension portions **212** of a sensor substrate **210**. The protrusion may be disposed between laminated portions of the extension portion **212** of the sensor substrate **210**. The protrusion may guide positions of the laminated portions of the extension portion **212** of the sensor substrate **210**. Through this, the protrusion may minimize interference between the laminated portions of the extension portion **212** of the sensor substrate **210**.

The base **110** may comprise a first protrusion **112**. The protrusion may comprise the first protrusion **112**. The first protrusion **112** may protrude from the upper surface of the base **110**. At least a portion of the first protrusion **112** may be disposed between a first portion **212-1** and a second portion **212-2** of the sensor substrate **210**. The first protrusion **112** may be formed as a single projection. In a modified embodiment, the first protrusion **112** may be formed as a plurality of projections. The number of the first protrusion **112** is less than or equal to the number of the second protrusion **113**. The number of the first protrusion **112** is less than or equal to the number of the third protrusion **114**.

The base **110** may comprise a second protrusion **113**. The protrusion may comprise the second protrusion **113**. The second protrusion **113** may protrude from the upper surface of the base **110**. At least a portion of the second protrusion **113** may be disposed between the second portion **212-2** and a third portion **212-3** of the sensor substrate **210**. The second protrusion **113** may be formed as a plurality of projections. The second protrusion **113** may be formed as two projections. In a modified embodiment, the second protrusion **113** may be formed as a single projection. That is, the second protrusion **113** may be formed as an integral projection. Alternatively, the second protrusion **113** may comprise three or more projections.

The number of the second protrusion **113** may be equal to the number of the third protrusion **114**. In a modified embodiment, the number of the second protrusion **113** may be greater than the number of the third protrusion **114**. Alternatively, the number of the second protrusion **113** may be less than the number of the third protrusion **114**.

The base **110** may comprise a third protrusion **114**. The protrusion may comprise the third protrusion **114**. The third protrusion **114** may protrude from the upper surface of the base **110**. At least a portion of the third protrusion **114** may be disposed between the third portion **212-3** and a fourth portion **212-4** of the sensor substrate **210**. The third protrusion **114** may be formed as a plurality of projections. The third protrusion **114** may be formed as two projections. In a modified embodiment, the third protrusion **114** may be formed as a single projection. That is, the third protrusion **114** may be formed as an integral projection. Alternatively, the third protrusion **114** may comprise three or more projections.

The first protrusion **112**, the second protrusion **113**, and the third protrusion **114** may be spaced apart from each other. The first protrusion **112**, the second protrusion **113**, and the third protrusion **114** may overlap each other in a first direction perpendicular to the optical axis direction. In this case, the first direction may be an x-axis direction or a y-axis direction. The first protrusion **112** may be disposed parallel to the optical axis. The second protrusion **113** may be disposed parallel to the optical axis. The third protrusion **114** may be disposed parallel to the optical axis.

Among lengths of the protrusions **112**, **113**, and **114** of the base **110** in the optical axis direction, a length overlapping the sensor substrate **210** in a direction perpendicular to the optical axis direction may be 10% to 50% of a length of the sensor substrate **210** in the optical axis direction. Among the lengths of the protrusions **112**, **113**, and **114** of the base **110** in the optical axis direction, a length overlapping the sensor substrate **210** in the direction perpendicular to the optical axis direction may be 10% to 30% of the length of the sensor substrate **210** in the optical axis direction. Among the lengths of the protrusions **112**, **113**, and **114** of the base **110** in the optical axis direction, a length overlapping the sensor substrate **210** in the direction perpendicular to the optical axis direction may be 10% to 90% of the length of the sensor substrate **210** in the optical axis direction. If an overlapping amount between the protrusions **112**, **113**, and **114** and the sensor substrate **210** increases further, it may be difficult to integrally realize the protrusions **112**, **113**, and **114** with the base **110**.

Based on the upper surface of the base **110**, a distance to upper ends of the protrusions **112**, **113**, and **114** of the base **110** may be 10% to 50% of a distance to an upper end of the sensor substrate **210**. Based on the upper surface of the base **110**, the distance to the upper ends of the protrusions **112**, **113**, and **114** of the base **110** may be 30% to 45% of the distance to the upper end of the sensor substrate **210**. Based on the upper surface of the base **110**, the distance to the upper ends of the protrusions **112**, **113**, and **114** of the base **110** may be 10% to 90% of the distance to the upper end of the sensor substrate **210**.

The base **110** may comprise a projection **115**. The projection **115** may be disposed on an upper side of an OIS-x coil **512**. Alternatively, the projection **115** may be disposed on an upper side of an OIS-y coil **522**. The projection **115** may prevent a phenomenon in which the OIS-x coil **512** is detached upward. When viewed from above, an edge of an upper surface of the OIS-x coil **512** is covered by the projection **115** of the base **110**, and a remaining portion of the upper surface of the OIS-x coil **512** may be opened without being covered by the base **110**.

The OIS-y coil **522** may comprise two coils spaced apart from each other. When viewed from above, upper surfaces of the two coils may be opened without being covered by the base **110**.

That is, upper sides of the OIS-x coil **512** and the OIS-y coil **522** may have a structure in which a portion of the base **110**, which is an injection-molded product, is omitted. Through this, a length of the base **110** in the optical axis direction can be minimized. Furthermore, a length of the camera device in the optical axis direction can also be minimized. Accordingly, a protruding thickness of the camera device from a smartphone can also be minimized.

In the present embodiment, in order to minimize an upper clearance during coil assembly while lowering the overall height of a product, some sections of the injection-molded product are opened, and a structure in which a round shape of a coil and the injection-molded product partially overlap may be comprised. Instead of a shape in which the entire upper portion of the injection-molded product is opened, it may be a shape in which only a portion is opened. Since the round-shaped portion of the coil and the injection-molded product partially overlap, it can play a role of preventing any unwanted movement (or looseness) of the coil in the upward and downward directions during the coil assembly. Furthermore, an anti-detachment effect can be expected by increasing even a small amount of a contact area with the fixed substrate **130**.

The camera device may comprise a cover **120**. The fixed unit may comprise the cover **120**. The cover **120** may be disposed on the base **110**. The cover **120** may be coupled to the base **110**. The cover **120** may be fixed to the base **110**. The cover **120** may accommodate a carrier **340** therein. The cover **120** may accommodate a housing **310** therein. The cover **120** may accommodate a frame **330** therein. The cover **120** may accommodate a sensor base **320** therein. The cover **120** may be a shield member. The cover **120** may be a shield can.

The cover **120** may comprise an upper plate **121**. The upper plate **121** may comprise a hole through which light passes. The upper plate **121** may function as an upper stopper for an AF moving unit. That is, when the carrier **340** moves upward, the carrier **340** may come into contact with the upper plate **121**.

The cover **120** may comprise a side plate **122**. The side plate **122** may extend from the upper plate **121**. The side plate **122** may be disposed on the base **110**. The side plate **122** may be disposed on a stepped portion protruded from a lower end of an outer side surface of the base **110**. The side plate **122** may comprise a plurality of side plates. The side plate **122** may comprise four side plates. The side plate **122** may comprise a first side plate and a second side plate disposed opposite to each other, and a third side plate and a fourth side plate disposed opposite to each other.

The camera device may comprise a fixed substrate **130**. The fixed unit may comprise the fixed substrate **130**. The fixed substrate **130** may be disposed on the base **110**. The fixed substrate **130** may comprise a circuit board. The fixed substrate **130** may comprise a flexible printed circuit board. The fixed substrate **130** may comprise an FPCB (flexible printed circuit board). The fixed substrate **130** may be energized with an outside. The fixed substrate **130** may supply a current to a coil, a sensor, a driver IC, and a gyro sensor.

The fixed substrate **130** may comprise a terminal **131**. The terminal **131** may be formed on an outer side surface of the fixed substrate **130**. The terminal **131** may comprise a plurality of terminals. The terminal **131** may be formed on an outer surface of a first side plate portion **133**. The terminal **131** may be electrically connected to an external component.

The fixed substrate **130** may comprise a lower plate portion **132**. An OIS-yaw coil **532** may be disposed on the lower plate portion **132**. An OIS-pitch coil **542** may be disposed on the lower plate portion **132**. The lower plate portion **132** may be disposed on the base **110**.

The fixed substrate **130** may comprise a first side plate portion **133**. An OIS-x coil **512** may be disposed on the first side plate portion **133**. The first side plate portion **133** may be disposed on a side surface of the base **110**. The first side plate portion **133** may be connected to the lower plate portion **132**. The first side plate portion **133** may be bent and extended from the lower plate portion **132**.

The fixed substrate **130** may comprise a second side plate portion **134**. The second side plate portion **134** may be disposed on an opposite side of the first side plate portion **133**. An OIS-y coil **522** may be disposed on the second side plate portion **134**.

The fixed substrate **130** may comprise a third side plate portion **135**. The third side plate portion **135** may connect the first side plate portion **133** and the second side plate portion **134**. An AF coil **420** may be disposed on the third side plate portion **135**. A portion where the third side plate portion **135** and the first side plate portion **133** are connected and a portion where the third side plate portion **135** and the second side plate portion **134** are connected may be formed by being bent.

The camera device may comprise a gyro sensor **140**. The fixed unit may comprise the gyro sensor **140**. The gyro sensor **140** may be disposed on the fixed substrate **130**. The gyro sensor **140** may be disposed on the lower plate portion **132** of the fixed substrate **130**. The gyro sensor **140** may detect a user's handshake or the like. The user's handshake or the like detected by the gyro sensor **140** may be compensated for by a driving unit.

The camera device may comprise a plate **150**. The plate **150** may be coupled to the lower surface of the base **110**. The plate **150** may be coupled to the lower surface of the bottom plate of the base **110**. The plate **150** may be coupled to the base **110** from below. The plate **150** may be disposed to close a hole of the base **110**.

The camera device may comprise a moving unit. The moving unit may move relative to the fixed unit. The moving unit may be movably disposed on the fixed unit. The moving unit may be moved by the driving unit.

The camera device may comprise an OIS moving unit that moves during OIS driving. The camera device may comprise a tilt moving unit. The OIS moving unit may comprise the tilt moving unit. The camera device may comprise a shift moving unit. The OIS moving unit may comprise the shift moving unit. The tilt moving unit may comprise an image sensor **220** and a lens. That is, during tilt driving, the image sensor **220** and the lens may move together. In other words, it may be driven in a module tilt method. The shift moving unit may comprise the lens. That is, during shift driving, the image sensor **220** is relatively fixed, and only the lens may move. In other words, it may be driven in a lens shift method.

The camera device may comprise an AF moving unit that moves during AF driving. The AF moving unit may comprise the lens. That is, during AF driving, the image sensor is relatively fixed, and only the lens may move.

The camera device may comprise a sensor substrate assembly **200**. The sensor substrate assembly **200** may be movably disposed on the base **110**. The sensor substrate assembly **200** may be tilt-driven. The sensor substrate assembly **200** may support a housing **310**. The sensor substrate assembly **200** may support a carrier **340**.

The camera device may comprise a sensor substrate **210**. The sensor substrate assembly **200** may comprise the sensor substrate **210**. The sensor substrate **210** may be disposed on the base **110**. The sensor substrate **210** may be disposed on a sensor base **320**. The sensor substrate **210** may movably support an image sensor **220**. The sensor substrate **210** may supply power to the image sensor **220**. The sensor substrate **210** may movably support the image sensor **220** relative to the base **110** through a bent portion. The sensor substrate **210** may be an FPCB.

The sensor substrate **210** may comprise a body portion **211**. The image sensor **220** may be disposed on the body portion **211**. The body portion **211** may be disposed perpendicular to an optical axis. The body portion **211** may be disposed on the sensor base **320**. The body portion **211** may be an inner portion.

The camera device may comprise a side substrate **211a**. The sensor substrate **210** may comprise the side substrate **211a**. The side substrate **211a** may be connected to the sensor substrate **210**. The side substrate **211a** may be integrally formed with the sensor substrate **210**. The side substrate **211a** may be bent and extended from the sensor substrate **210**. The side substrate **211a** may be disposed on a side surface of a housing **310**. The side substrate **211a** may be disposed on a first side surface of the housing **310**. An AF coil **420** may be disposed on the side substrate **211a**. An AF sensor **430** may be disposed on the side substrate **211a**.

The sensor substrate **210** may comprise a bent portion **211b**. The bent portion **211b** may be formed between the body portion **211** and the side substrate **211a**. The bent portion **211b** may have a curvature.

The sensor substrate **210** may comprise a hole **211c**. The hole **211c** may be formed in the bent portion **211b**.

Since the AF coil **420** is in the moving unit, a U-shaped bent portion **211b** may be comprised to minimize resistance of the sensor substrate **210** during y-axis driving. In the U-shaped bent portion **211b**, a hole **211c**, which is a partially cut section, exists to minimize resistance to the y-axis driving.

The sensor substrate **210** may comprise an extension portion **212**. The extension portion **212** may be disposed between the base **110** and the housing **310**. The extension portion **212** may comprise a bent shape so that the sensor substrate **210** movably supports the image sensor **220**. The extension portion **212** may be formed so that the sensor substrate **210** does not interfere with the base **110** when the image sensor **220** moves. The extension portion **212** of the sensor substrate **210** may be disposed so that the image sensor **220** is movable relative to the base **110**. The extension portion **212** may extend from the body portion **211**. The extension portion **212** may extend outward from the body portion **211**. The extension portion **212** may connect the body portion **211** and an outer side portion **213**. The extension portion **212** may be bent a plurality of times. A stiffener **230** for maintaining a shape may be disposed on at least one or more portions of the extension portion **212**. The stiffener **230** may be disposed on a portion of the extension portion **212** of the sensor substrate **210**.

In the present embodiment, for smooth driving in an x-axis direction, a yaw direction, and a pitch direction, a portion of the sensor substrate **210** may be formed as an extension portion **212** having a U-shape. In addition, a stiffener **230** may be applied for smooth driving in the yaw direction and the pitch direction. For folding of the sensor substrate **210**, a portion of the base **110** may protrude. That is, the base **110** may comprise a protrusion disposed below the stiffener **230**.

That is, in the present embodiment, the sensor substrate **210** may comprise a bent portion **211b** and a hole **211c** for y-axis driving. In addition, the sensor substrate **210** may comprise the extension portion **212** and the stiffener **230** for x-axis, yaw, and pitch driving.

The extension portion **212** may comprise a zigzag twisted shape. The extension portion **212** may comprise a structure overlapped a plurality of times. Through this, the extension portion **212** can minimize a reaction force that may be generated by the sensor substrate **210** when the image sensor **220** is driven.

The extension portion **212** may comprise a first portion **212-1**. The extension portion **212** may comprise a second portion **212-2**. The first portion **212-1** and the second portion **212-2** may be disposed to face each other. The first portion **212-1** and the second portion **212-2** may overlap each other in a first direction perpendicular to an optical axis direction. In this case, the first direction may be an x-axis direction or a y-axis direction.

The extension portion **212** may comprise a third portion **212-3**. The extension portion **212** may comprise a fourth portion **212-4**. The third portion **212-3** and the fourth portion **212-4** may be disposed to face each other. The third portion **212-3** and the fourth portion **212-4** may overlap each other in a first direction perpendicular to the optical axis direction. In this case, the first direction may be an x-axis direction or a y-axis direction.

The second portion **212-2** and the third portion **212-3** may be disposed to face each other. The first portion **212-1**, the second portion **212-2**, the third portion **212-3**, and the fourth portion **212-4** may overlap each other in the first direction perpendicular to the optical axis direction. The first portion **212-1** and the third portion **212-3** may overlap each other in the first direction perpendicular to the optical axis direction. The first portion **212-1** and the fourth portion **212-4** may overlap each other in the first direction perpendicular to the optical axis direction. The second portion **212-2** and the third portion **212-3** may overlap each other in the first direction perpendicular to the optical axis direction. The second portion **212-2** and the fourth portion **212-4** may overlap each other in the first direction perpendicular to the optical axis direction.

At least a portion of the first portion **212-1** may be disposed parallel to the optical axis direction. At least a portion of the second portion **212-2** may be disposed parallel to the optical axis direction. At least a portion of the third portion **212-3** may be disposed parallel to the optical axis direction. At least a portion of the fourth portion **212-4** may be disposed parallel to the optical axis direction. However, all of the first to fourth portions **212-1**, **212-2**, **212-3**, and **212-4** may be disposed to be inclined within 10 degrees with respect to the optical axis due to handshake driving, manufacturing errors, or the like.

The extension portion **212** may comprise a first bent portion **212-5**. The first bent portion **212-5** may connect the first portion **212-1** and the second portion **212-2**. The first bent portion **212-5** may connect an upper end of the first portion **212-1** and an upper end of the second portion **212-2**. In this case, an upper side may be a direction opposite to a direction in which the base **110** is disposed based on the extension portion **212**. The first bent portion **212-5** may connect one end of the first portion **212-1** and one end of the second portion **212-2**. In a modified embodiment, the first bent portion **212-5** may connect a side surface of the first portion **212-1** and a side surface of the second portion **212-2**. The first bent portion **212-5** may be formed in a shape having a curvature. The first bent portion **212-5** may be formed by being bent. The first bent portion **212-5** may be formed through bending.

The extension portion **212** may comprise a second bent portion **212-6**. The second bent portion **212-6** may connect the second portion **212-2** and the third portion **212-3**. The second bent portion **212-6** may connect the side surface of the second portion **212-2** and one side surface of the third portion **212-3**. In a modified embodiment, the second bent portion **212-6** may connect the upper end of the second portion **212-2** and the upper end of the third portion **212-3**. The second bent portion **212-6** may be formed in a shape having a curvature. The second bent portion **212-6** may be formed by being bent. The second bent portion **212-6** may be formed through bending.

The extension portion **212** may comprise a third bent portion **212-7**. The third bent portion **212-7** may connect the third portion **212-3** and the fourth portion **212-4**. The third bent portion **212-7** may connect the other side surface of the third portion **212-3** and the side surface of the fourth portion **212-4**. In a modified embodiment, the third bent portion **212-7** may connect the upper end of the third portion **212-3** and the upper end of the fourth portion **212-4**. The third bent portion **212-7** may be formed in a shape having a curvature. The third bent portion **212-7** may be formed by being bent. The third bent portion **212-7** may be formed through bending. The second bent portion **212-6** may be connected to one side surface of the third portion **212-3**, and the third bent portion **212-7** may be connected to the other side surface of the third portion **212-3**.

The extension portion **212** may comprise a fourth bent portion. The fourth bent portion may be bent from the fourth portion **212-4**. The fourth bent portion may be connected to an upper end of the fourth portion **212-4**. The fourth bent portion may be disposed between the outer side portion **213** and the fourth portion **212-4**.

The sensor substrate **210** may comprise an outer side portion **213**. The outer side portion **213** may protrude outward. A connector **214** for coupling with the outside may be disposed on the outer side portion **213**. The connector **214** may be connected to the outside. The connector **214** may be disposed on the outer side portion **213**.

In a first modified embodiment of (a) of FIG. 28b, an extension portion **212a** of a sensor substrate **210a** may overlap in the optical axis direction. The sensor substrate **210a** may comprise first to fifth portions overlapping in the optical axis direction. The sensor substrate **210a** may comprise first to fourth bent portions connecting the first to fifth portions.

In a second modified embodiment of (b) of FIG. 28b, an extension portion **212b** of a sensor substrate **210b** may overlap in a first direction perpendicular to the optical axis direction. The sensor substrate **210b** may comprise first to fourth portions overlapping in the first direction perpendicular to the optical axis direction. The sensor substrate **210b** may comprise first to third bent portions connecting the first to fourth portions. In this case, the first to third bent portions may connect upper ends or lower ends of the first to fourth portions.

The camera device may comprise a lens. The lens may be disposed on the carrier **340**. The lens may be coupled to the carrier **340**. The lens may be fixed to the carrier **340**. The lens may be adhered to the carrier **340** with an adhesive. The lens may be disposed on the image sensor **220**. The lens may comprise a plurality of lenses. The lens may comprise 5 or 6 lenses. The lens may comprise 7 or more lenses. The lens may be coupled to a lens barrel. In this case, the lens barrel may be coupled to the carrier **340**. The lens barrel may be screw-coupled to the carrier **340**. Alternatively, the lens barrel may be coupled to the carrier **340** by an adhesive without a screw. The lens may move integrally with the carrier **340**.

The camera device may comprise the image sensor **220**. The sensor substrate assembly **200** may comprise the image sensor **220**. Light passing through the lens and a filter **350** may be incident on the image sensor **220** to form an image. The image sensor **220** may be disposed on the sensor substrate **210**. The image sensor **220** may be coupled to the sensor substrate **210**. The image sensor **220** may be fixed to the sensor substrate **210**. The image sensor **220** may be soldered to the sensor substrate **210**. The image sensor **220** may be mounted on the sensor substrate **210**. The image sensor **220** may be electrically connected to the sensor substrate **210**. For example, the image sensor **220** may be coupled to the sensor substrate **210** by surface mounting technology (SMT). In a modified embodiment, the image sensor **220** may be coupled to the sensor substrate **210** by a flip chip technology. The image sensor **220** may be disposed such that an optical axis coincides with the lens. That is, the optical axis of the image sensor **220** and the optical axis of the lens may be aligned. The image sensor **220** may convert light irradiated to an effective image area of the image sensor **220** into an electrical signal. The image sensor **220** may comprise any one of a charge coupled device (CCD), a metal oxide semi-conductor (MOS), a CPD, and a CID.

The camera device may comprise a stiffener **230**. The sensor substrate assembly **200** may comprise the stiffener **230**. The stiffener **230** may be disposed to maintain a bent shape at a bent portion of the sensor substrate **210**. The stiffener **230** may be disposed on the extension portion **212** of the sensor substrate **210**. The stiffener **230** may be disposed to maintain a zigzag twisted shape of the sensor substrate **210**, which is an FPCB.

The stiffener **230** may comprise a bent portion. The bent portion may be formed in a shape corresponding to the extension portion **212** of the sensor substrate **210**. The stiffener **230** may comprise a shape bent at least twice.

The stiffener **230** may comprise a hole. The hole may be formed to penetrate the stiffener **230**. The hole may be formed in the extension portion **212**.

The camera device may comprise a housing **310**. The housing **310** may be disposed on the sensor substrate **210**. The housing **310** may be disposed on the base **110**. The housing **310** may be disposed on a moving plate **660**. The housing **310** may be disposed on a sensor base **320**. The housing **310** may be disposed on a frame **330**. The housing **310** may be disposed within the cover **120**. The housing **310** may be disposed outside the carrier **340**. The housing **310** may be disposed between the carrier **340** and the cover **120**.

The stiffener **230** may comprise a first stiffener **231**. The first stiffener **231** may be disposed on a first bent portion **212-5** of the sensor substrate **210**. The first stiffener **231** may be formed in a shape corresponding to the first bent portion **212-5** of the sensor substrate **210**. The first stiffener **231** may be disposed on an upper side of the first bent portion **212-5**. The first stiffener **231** may comprise a U-shape.

The stiffener **230** may comprise a second stiffener **232**. The second stiffener **232** may be disposed on a second bent portion **212-6** of the sensor substrate **210**. The second stiffener **232** may be formed in a shape corresponding to the second bent portion **212-6** of the sensor substrate **210**. The second stiffener **232** may be disposed outside the second bent portion **212-6**. The second stiffener **232** may comprise a U-shape.

The stiffener **230** may comprise a third stiffener **233**. The third stiffener **233** may be disposed on a third bent portion **212-7** of the sensor substrate **210**. The third stiffener **233** may be formed in a shape corresponding to the third bent portion **212-7** of the sensor substrate **210**. The third stiffener **233** may be disposed outside the third bent portion **212-7**. The third stiffener **233** may comprise a U-shape.

The stiffener **230** may comprise a fourth stiffener **234**. The fourth stiffener **234** may be disposed on a fourth bent portion of the sensor substrate **210**. The fourth stiffener may be formed in a shape corresponding to the fourth bent portion of the sensor substrate **210**. The fourth stiffener **234** may be disposed on a lower side of the fourth bent portion. The fourth stiffener **234** may comprise an L-shape.

The camera device may comprise a sensor base **320**. The image sensor **220** may be fixed to the sensor base **320**. The sensor substrate **210** may be disposed on the sensor base **320**. The sensor base **320** may be disposed on the base **110**. The sensor base **320** may be disposed on a body portion **211** of the sensor substrate **210**. The sensor base **320** may be coupled to the body portion **211** of the sensor substrate **210**. The sensor base **320** may be fixed to the body portion **211** of the sensor substrate **210**. The sensor base **320** may be disposed between the sensor substrate **210** and the base **110**. The sensor base **320** may be disposed on a moving plate **660**. The sensor base **320** may be disposed between a housing **310** and the base **110**. The sensor base **320** may be disposed between a frame **330** and the moving plate **660**. The sensor base **320** may be disposed within the cover **120**.

The camera device may comprise a frame **330**. The frame **330** may be disposed between the sensor base **320** and the housing **310**. The frame **330** may be disposed on the sensor base **320**. The frame **330** may be disposed on the base **110**. The frame **330** may be disposed on the moving plate **660**. The frame **330** may be disposed below the housing **310**. The frame **330** may be disposed within the cover **120**.

The camera device may comprise a carrier **340**. The carrier **340** may be disposed within the housing **310**. The carrier **340** may be disposed on the sensor substrate **210**. The carrier **340** may be disposed on the base **110**. The carrier **340** may be disposed on the moving plate **660**. The carrier **340** may be disposed on the sensor base **320**. The carrier **340** may be disposed on the frame **330**. The carrier **340** may be disposed within the cover **120**.

The camera device may comprise a filter **350**. The filter **350** may serve to block light of a specific frequency band from light passing through a lens from being incident on the image sensor **220**. The filter **350** may be disposed perpendicular to an optical axis. The filter **350** may be disposed between the lens and the image sensor **220**. The filter **350** may be disposed on the housing **310**. The filter **350** may be disposed on a lower surface of the housing **310**. The filter **350** may comprise an infrared filter. The infrared filter may block light in an infrared region from being incident on the image sensor **220**. The filter **350** may comprise an infrared reflection filter. The filter **350** may comprise an infrared absorption filter.

The camera device may comprise a driving unit. The driving unit may move a moving unit relative to a fixed unit. The driving unit may move the moving unit through an electromagnetic interaction force. The driving unit may comprise a magnet and a coil.

The camera device may comprise an AF driving unit **400**. The AF driving unit **400** may move an AF moving unit relative to the fixed unit. The AF driving unit **400** may move the carrier **340** relative to the housing **310**. The AF driving unit **400** may move the carrier **340** in the optical axis direction. The AF driving unit **400** may move a lens in the optical axis direction. The AF driving unit **400** may move the carrier **340** through the electromagnetic interaction force. The AF driving unit **400** may comprise a magnet and a coil. The AF driving unit **400** may comprise a driving magnet and a driving coil. The AF driving units **400** may overlap each other in a y-axis direction. Alternatively, the AF driving units **400** may overlap each other in an x-axis direction. The y-axis direction may be perpendicular to the x-axis direction. The y-axis direction may intersect with the x-axis direction.

The camera device may comprise an AF magnet **410**. The AF driving unit **400** may comprise the AF magnet **410**. The AF magnet **410** may be an "AF magnet." The AF magnet **410** may be disposed on the carrier **340**. The AF magnet **410** may be coupled to the carrier **340**. The AF magnet **410** may be fixed to the carrier **340**. The AF magnet **410** may be adhered to the carrier **340** with an adhesive. The AF magnet **410** may move integrally with the carrier **340**. The AF magnet **410** may be disposed between the carrier **340** and an AF coil **420**. The AF magnet **410** may be disposed on the housing **310**. The AF magnet **410** may be disposed on the base **110**. The AF magnet **410** may be disposed within the cover **120**.

The AF magnet **410** may be a permanent magnet. The AF magnet **410** may be a 4-pole magnet. The AF magnet **410** may be a 4-pole magnetized magnet magnetized with four poles. The AF magnet **410** may comprise a first magnet portion comprising an N-pole and an S-pole, a second magnet portion comprising an S-pole and an N-pole, and a neutral portion between the first magnet portion and the second magnet portion. A surface of the AF magnet **410** facing the AF coil **420** may comprise an N-pole and an S-pole.

The AF magnet **410** may face the AF coil **420**. The AF magnet **410** may be opposed to the AF coil **420**. The AF magnet **410** may be disposed to correspond to the AF coil **420**. The AF magnet **410** may be disposed at a position corresponding to the AF coil **420**. The AF magnet **410** may interact with the AF coil **420**. The AF magnet **410** may electromagnetically interact with the AF coil **420**. The AF magnet **410** may overlap the AF coil **420** in a direction perpendicular to the optical axis. The AF magnet **410** may overlap the AF coil **420** in the y-axis direction.

The AF magnet **410** may move. The AF magnet **410** may move in the optical axis direction. The AF magnet **410** may move upward in the optical axis direction. The AF magnet **410** may move downward in the optical axis direction. When a current is applied to the AF coil **420**, the AF magnet **410** may move. The AF magnet **410** may move through interaction with the AF coil **420**. The AF magnet **410** may move together with the carrier **340**. The AF magnet **410** may move together with the lens. Even when the AF magnet **410** moves, the distance between the AF magnet **410** and the AF coil **420** in the y-axis direction may be maintained constant.

The camera device may comprise an AF coil **420**. The AF driving unit **400** may comprise the AF coil **420**. The AF coil **420** may be disposed on the sensor substrate **210**. The AF coil **420** may be coupled to the sensor substrate **210**. The AF coil **420** may be fixed to the sensor substrate **210**. The AF coil **420** may be soldered to the sensor substrate **210**. The AF coil **420** may be disposed on the housing **310**. The AF coil **420** may be coupled to the housing **310**. The AF coil **420** may be fixed to the housing **310**. The AF coil **420** may be adhered to the housing **310** with an adhesive. The AF coil **420** may move integrally with the housing **310**. The AF coil **420** may be disposed between the carrier **340** and a side plate **122** of the cover **120**. The AF coil **420** may be disposed between the AF magnet **410** and the side plate **122** of the cover **120**. The AF coil **420** may be disposed on the base **110**. The AF coil **420** may be disposed within the cover **120**.

The AF coil **420** may be formed in a ring shape. The AF coil **420** may comprise a first portion facing an N-pole of the AF magnet **410**, and a second portion facing an S-pole of the AF magnet **410**. The first portion and the second portion of the AF coil **420** may overlap in the optical axis direction. The second portion of the AF coil **420** may be disposed above the first portion.

A current may be applied to the AF coil **420**. When a current is applied to the AF coil **420**, an electromagnetic field may be formed around the AF coil **420**. A forward current may be applied to the AF coil **420**. A reverse current may be applied to the AF coil **420**. The AF coil **420** may move the AF magnet **410**. The AF coil **420** may be relatively fixed when the AF magnet **410** moves.

The camera device may comprise an AF sensor **430**. The AF driving unit **400** may comprise the AF sensor **430**. The AF sensor **430** may be disposed on the sensor substrate **210**. The AF sensor **430** may be coupled to the sensor substrate **210**. The AF sensor **430** may be fixed to the sensor substrate **210**. The AF sensor **430** may be soldered to the sensor substrate **210**. The AF sensor **430** may be disposed on the housing **310**. The AF sensor **430** may be coupled to the housing **310**. The AF sensor **430** may be fixed to the housing **310**. The AF sensor **430** may move integrally with the housing **310**. The AF sensor **430** may be disposed within the AF coil **420**. In a modified embodiment, the AF sensor **430** may be disposed outside the AF coil **420**. The AF sensor **430** may be disposed on the base **110**. The AF sensor **430** may be disposed within the cover **120**.

The AF sensor **430** may comprise a Hall sensor. The AF sensor **430** may detect the AF magnet **410**. The AF sensor **430** may detect a magnetic force of the AF magnet **410**. The AF sensor **430** may detect movement or a position of the carrier **340**. The AF sensor **430** may detect movement or a position of the lens. The AF sensor **430** may be disposed at a position corresponding to the AF magnet **410**. The AF sensor **430** may overlap the AF magnet **410** in a direction perpendicular to the optical axis. The AF sensor **430** may overlap the AF magnet **410** in the y-axis direction. The AF sensor **430** may overlap a neutral portion of the AF magnet **410** in the y-axis direction.

The camera device may comprise an AF driver IC **440**. The AF driving unit **400** may comprise the AF driver IC **440**. The AF driver IC **440** may be disposed on the sensor substrate **210**. The AF driver IC **440** may be coupled to the sensor substrate **210**. The AF driver IC **440** may be fixed to the sensor substrate **210**. The AF driver IC **440** may be soldered to the sensor substrate **210**. The AF driver IC **440** may be disposed on the housing **310**. The AF driver IC **440** may be coupled to the housing **310**. The AF driver IC **440** may be fixed to the housing **310**. The AF driver IC **440** may move integrally with the housing **310**. The AF driver IC **440** may be disposed on the base **110**. The AF driver IC **440** may be disposed within the cover **120**.

The AF driver IC **440** may supply a current to the AF coil **420**. The AF driver IC **440** may be electrically connected to the AF coil **420**. The AF driver IC **440** may be electrically connected to the AF sensor **430**.

The camera device may comprise an OIS driving unit. The OIS driving unit may move an OIS moving unit relative to a fixed unit. The OIS driving unit may move the OIS moving unit in a direction perpendicular to the optical axis. The OIS driving unit may tilt the OIS moving unit. The OIS driving unit may move the OIS moving unit through an electromagnetic interaction force. The OIS driving unit may comprise a magnet and a coil.

The camera device may comprise an OIS-x driving unit **510**. The OIS-x driving unit **510** may move an OIS-x moving unit relative to a fixed unit. The OIS-x driving unit **510** may move the housing **310** in an x-axis direction. The OIS-x driving unit **510** may move the carrier **340** in the x-axis direction. The OIS-x driving unit **510** may move a lens in the x-axis direction. The OIS-x driving unit **510** may move the housing **310** through an electromagnetic interaction force. The OIS-x driving unit **510** may comprise a magnet and a coil. The OIS-x driving unit **510** may comprise a driving magnet and a driving coil. The OIS-x driving units **510** may overlap each other in the x-axis direction. Alternatively, the OIS-x driving units **510** may overlap each other in a y-axis direction. The OIS-x driving unit **510** may move the lens in a first direction perpendicular to the optical axis direction. In this case, the first direction may be the x-axis direction.

The camera device may comprise an OIS-x magnet **511**. The OIS-x driving unit **510** may comprise the OIS-x magnet **511**. The OIS-x magnet **511** may be an "OIS-x magnet." The OIS-x magnet **511** may be disposed in the housing **310**. The OIS-x magnet **511** may be coupled to the housing **310**. The OIS-x magnet **511** may be fixed to the housing **310**. The OIS-x magnet **511** may be adhered to the housing **310** with an adhesive. The OIS-x magnet **511** may move integrally with the housing **310**. The OIS-x magnet **511** may be disposed between the housing **310** and an OIS-x coil **512**. The OIS-x magnet **511** may be disposed between the carrier **340** and the OIS-x coil **512**. The OIS-x magnet **511** may be disposed on the housing **310**. The OIS-x magnet **511** may be disposed on the base **110**. The OIS-x magnet **511** may be disposed within the cover **120**.

The OIS-x magnet **511** may be a permanent magnet. The OIS-x magnet **511** may be a 2-pole magnet. The OIS-x magnet **511** may be formed with only two polarities. The OIS-x magnet **511** may comprise an N-pole and an S-pole. A surface of the OIS-x magnet **511** facing the OIS-x coil **512** may be an N-pole. Alternatively, the surface of the OIS-x magnet **511** facing the OIS-x coil **512** may be an S-pole. That is, the surface of the OIS-x magnet **511** facing the OIS-x coil **512** may be formed of a single polarity. An entire area of a first surface of the OIS-x magnet **511** facing the OIS-x coil **512** may have a single polarity.

The OIS-x magnet **511** may face the OIS-x coil **512**. The OIS-x magnet **511** may be opposed to the OIS-x coil **512**. The OIS-x magnet **511** may be disposed to correspond to the OIS-x coil **512**. The OIS-x magnet **511** may be disposed at a position corresponding to the OIS-x coil **512**. The OIS-x magnet **511** may interact with the OIS-x coil **512**. The OIS-x magnet **511** may electromagnetically interact with the OIS-x coil **512**. The OIS-x magnet **511** may overlap the OIS-x coil **512** in a direction perpendicular to the optical axis. The OIS-x magnet **511** may overlap the OIS-x coil **512** in the x-axis direction.

The OIS-x magnet **511** may move. The OIS-x magnet **511** may move in the x-axis direction. The OIS-x magnet **511** may move to one side in the x-axis direction. The OIS-x magnet **511** may move to the other side in the x-axis direction. When a current is applied to the OIS-x coil **512**, the OIS-x magnet **511** may move. The OIS-x magnet **511** may move through interaction with the OIS-x coil **512**. The OIS-x magnet **511** may move together with the housing **310**. The OIS-x magnet **511** may move together with the carrier **340**. The OIS-x magnet **511** may move together with the lens. When the OIS-x magnet **511** moves, a distance between the OIS-x magnet **511** and the OIS-x coil **512** in the x-axis direction may be varied.

When a current is applied to the OIS-x coil **512**, the OIS-x magnet **511** may move in the x-axis direction to become closer to or farther from the OIS-x coil **512**.

The camera device may comprise an OIS-x coil **512**. The OIS-x driving unit **510** may comprise the OIS-x coil **512**. The OIS-x coil **512** may be disposed on a fixed substrate **130**. The OIS-x coil **512** may be coupled to the fixed substrate **130**. The OIS-x coil **512** may be fixed to the fixed substrate **130**. The OIS-x coil **512** may be soldered to the fixed substrate **130**. The OIS-x coil **512** may be disposed on the base **110**. The OIS-x coil **512** may be coupled to the base **110**. The OIS-x coil **512** may be fixed to the base **110**. The OIS-x coil **512** may be adhered to the base **110** with an adhesive. The OIS-x coil **512** may be disposed between the carrier **340** and a side plate **122** of the cover **120**. The OIS-x coil **512** may be disposed between the housing **310** and the side plate **122** of the cover **120**. The OIS-x coil **512** may be disposed between the OIS-x magnet **511** and the side plate **122** of the cover **120**. The OIS-x coil **512** may be disposed on the base **110**. The OIS-x coil **512** may be disposed within the cover **120**. The OIS-x coil **512** may be disposed in a second side direction of the housing **310**.

The OIS-x coil **512** may be formed in a ring shape. The OIS-x coil **512** may face an N-pole of the OIS-x magnet **511**. Alternatively, the OIS-x coil **512** may face an S-pole of the OIS-x magnet **511**.

A current may be applied to the OIS-x coil **512**. When a current is applied to the OIS-x coil **512**, an electromagnetic field may be formed around the OIS-x coil **512**. A forward current may be applied to the OIS-x coil **512**. A reverse current may be applied to the OIS-x coil **512**. The OIS-x coil **512** may move the OIS-x magnet **511**. The OIS-x coil **512** may be relatively fixed when the OIS-x magnet **511** moves.

The camera device may comprise an OIS-x sensor **513**. The OIS-x driving unit **510** may comprise the OIS-x sensor **513**. The OIS-x sensor **513** may be disposed on the fixed substrate **130**. The OIS-x sensor **513** may be coupled to the fixed substrate **130**. The OIS-x sensor **513** may be fixed to the fixed substrate **130**. The OIS-x sensor **513** may be soldered to the fixed substrate **130**. The OIS-x sensor **513** may be disposed on the base **110**. The OIS-x sensor **513** may be coupled to the base **110**. The OIS-x sensor **513** may be fixed to the base **110**. The OIS-x sensor **513** may be disposed within the OIS-x coil **512**. In a modified embodiment, the OIS-x sensor **513** may be disposed outside the OIS-x coil **512**. The OIS-x sensor **513** may be disposed on the base **110**. The OIS-x sensor **513** may be disposed within the cover **120**.

The OIS-x sensor **513** may comprise a Hall sensor. The OIS-x sensor **513** may detect the OIS-x magnet **511**. The OIS-x sensor **513** may detect a magnetic force of the OIS-x magnet **511**. The OIS-x sensor **513** may detect movement or a position of the housing **310**. The OIS-x sensor **513** may detect movement or a position of the carrier **340**. The OIS-x sensor **513** may detect movement or a position of the lens. The OIS-x sensor **513** may be disposed at a position corresponding to the OIS-x magnet **511**. The OIS-x sensor **513** may overlap the OIS-x magnet **511** in a direction perpendicular to the optical axis. The OIS-x sensor **513** may overlap the OIS-x magnet **511** in the x-axis direction.

The camera device may comprise an OIS-y driving unit **520**. The OIS-y driving unit **520** may move an OIS-y moving unit relative to a fixed unit. The OIS-y driving unit **520** may move the housing **310** in a y-axis direction. The OIS-y driving unit **520** may move the frame **330** in the y-axis direction. The OIS-y driving unit **520** may move the carrier **340** in the y-axis direction. The OIS-y driving unit **520** may move a lens in the y-axis direction. The OIS-y driving unit **520** may move the housing **310** through an electromagnetic interaction force. The OIS-y driving unit **520** may comprise a magnet and a coil. The OIS-y driving unit **520** may comprise a driving magnet and a driving coil. The OIS-y driving units **520** may overlap each other in an x-axis direction. Alternatively, the OIS-y driving units **520** may overlap each other in the y-axis direction. The OIS-y driving unit **520** may move the lens in a second direction perpendicular to the optical axis direction and the first direction. The OIS-y driving unit **520** may move the lens in the second direction perpendicular to the optical axis direction and intersecting the first direction. In this case, the second direction may be the y-axis direction.

The camera device may comprise an OIS-y magnet **521**. The OIS-y driving unit **520** may comprise the OIS-y magnet **521**. The OIS-y magnet **521** may be an "OIS-y magnet." The OIS-y magnet **521** may be disposed on the housing **310**. The OIS-y magnet **521** may be coupled to the housing **310**. The OIS-y magnet **521** may be fixed to the housing **310**. The OIS-y magnet **521** may be adhered to the housing **310** with an adhesive. The OIS-y magnet **521** may move integrally with the housing **310**. The OIS-y magnet **521** may be disposed between the housing **310** and an OIS-y coil **522**. The OIS-y magnet **521** may be disposed between the carrier **340** and the OIS-y coil **522**. The OIS-y magnet **521** may be disposed on the housing **310**. The OIS-y magnet **521** may be disposed on the base **110**. The OIS-y magnet **521** may be disposed within the cover **120**.

The OIS-y magnet **521** may be a permanent magnet. The OIS-y magnet **521** may be a 4-pole magnet. The OIS-y magnet **521** may be a 4-pole magnetized magnet magnetized with four poles. The OIS-y magnet **521** may comprise a first magnet portion comprising an N-pole and an S-pole, a second magnet portion comprising an S-pole and an N-pole, and a neutral portion between the first magnet portion and the second magnet portion. A surface of the OIS-y magnet **521** facing the OIS-y coil **522** may comprise an N-pole and an S-pole. A first surface of the OIS-y magnet **521** facing the OIS-y coil **522** may comprise an N-pole and an S-pole.

The OIS-y magnet **521** may face the OIS-y coil **522**. The OIS-y magnet **521** may be opposed to the OIS-y coil **522**. The OIS-y magnet **521** may be disposed to correspond to the OIS-y coil **522**. The OIS-y magnet **521** may be disposed at a position corresponding to the OIS-y coil **522**. The OIS-y magnet **521** may interact with the OIS-y coil **522**. The OIS-y magnet **521** may electromagnetically interact with the OIS-y coil **522**. The OIS-y magnet **521** may overlap the OIS-y coil **522** in a direction perpendicular to the optical axis. The OIS-y magnet **521** may overlap the OIS-y coil **522** in the x-axis direction. The OIS-y coil **522** may be disposed in a third side direction of the housing **310**. In this case, the third side direction of the housing **310** may be an opposite side of the second side direction of the housing **310**.

The OIS-x coil **512**, the OIS-x magnet **511**, the OIS-y magnet **521**, and the OIS-y coil **522** may overlap in the x-axis direction.

The OIS-y magnet **521** may move. The OIS-y magnet **521** may move in the y-axis direction. The OIS-y magnet **521** may move to one side in the y-axis direction. The OIS-y magnet **521** may move to the other side in the y-axis direction. When a current is applied to the OIS-y coil **522**, the OIS-y magnet **521** may move. The OIS-y magnet **521** may move through interaction with the OIS-y coil **522**. The OIS-y magnet **521** may move together with the housing **310**. The OIS-y magnet **521** may move together with the frame **330**. The OIS-y magnet **521** may move together with the carrier **340**. The OIS-y magnet **521** may move together with the lens. Even when the OIS-y magnet **521** moves, a distance between the OIS-y magnet **521** and the OIS-y coil **522** in the x-axis direction may be maintained constant.

When a current is applied to the OIS-y coil **522**, a distance in the x-axis direction between the OIS-y magnet **521** and the OIS-y coil **522** is not changed, and the OIS-y magnet **521** may move in the y-axis direction.

The OIS-y magnet **521** may be disposed on an opposite side of the OIS-x magnet **511** with respect to the lens. The OIS-y magnet **521** may be disposed on an opposite side of the OIS-x magnet **511** with respect to the optical axis.

The camera device may comprise an OIS-y coil **522**. The OIS-y driving unit **520** may comprise the OIS-y coil **522**. The OIS-y coil **522** may be disposed on the fixed substrate **130**. The OIS-y coil **522** may be coupled to the fixed substrate **130**. The OIS-y coil **522** may be fixed to the fixed substrate **130**. The OIS-y coil **522** may be soldered to the fixed substrate **130**. The OIS-y coil **522** may be disposed on the base **110**. The OIS-y coil **522** may be coupled to the base **110**. The OIS-y coil **522** may be fixed to the base **110**. The OIS-y coil **522** may be adhered to the base **110** with an adhesive. The OIS-y coil **522** may be disposed between the carrier **340** and a side plate **122** of the cover **120**. The OIS-y coil **522** may be disposed between the housing **310** and the side plate **122** of the cover **120**. The OIS-y coil **522** may be disposed between the OIS-y magnet **521** and the side plate **122** of the cover **120**. The OIS-y coil **522** may be disposed on the base **110**. The OIS-y coil **522** may be disposed within the cover **120**.

The OIS-y coil **522** may be formed in a ring shape. The OIS-y coil **522** may comprise a plurality of coils. The OIS-y coil **522** may comprise two coils. The OIS-y coil **522** may comprise a third-first coil **522**-1, a portion of which faces the N-pole of the first surface of the OIS-y magnet **521**. The OIS-y coil **522** may comprise a third-second coil **522**-2, a portion of which faces the S-pole of the first surface of the OIS-y magnet **521**. In a modified embodiment, the OIS-y coil **522** may be formed as a single coil.

A current may be applied to the OIS-y coil **522**. When a current is applied to the OIS-y coil **522**, an electromagnetic field may be formed around the OIS-y coil **522**. A forward current may be applied to the OIS-y coil **522**. A reverse current may be applied to the OIS-y coil **522**. The OIS-y coil **522** may move the OIS-y magnet **521**. The OIS-y coil **522** may be relatively fixed when the OIS-y magnet **521** moves.

The camera device may comprise an OIS-y sensor **523**. The OIS-y driving unit **520** may comprise the OIS-y sensor **523**. The OIS-y sensor **523** may be disposed on the fixed substrate **130**. The OIS-y sensor **523** may be coupled to the fixed substrate **130**. The OIS-y sensor **523** may be fixed to the fixed substrate **130**. The OIS-y sensor **523** may be soldered to the fixed substrate **130**. The OIS-y sensor **523** may be disposed on the base **110**. The OIS-y sensor **523** may be coupled to the base **110**. The OIS-y sensor **523** may be fixed to the base **110**. The OIS-y sensor **523** may be disposed within the OIS-y coil **522**. In a modified embodiment, the OIS-y sensor **523** may be disposed outside the OIS-y coil **522**. The OIS-y sensor **523** may be disposed on the base **110**. The OIS-y sensor **523** may be disposed within the cover **120**.

The OIS-y sensor **523** may comprise a Hall sensor. The OIS-y sensor **523** may detect the OIS-y magnet **521**. The OIS-y sensor **523** may detect a magnetic force of the OIS-y magnet **521**. The OIS-y sensor **523** may detect movement or a position of the housing **310**. The OIS-y sensor **523** may detect movement or a position of the frame **330**. The OIS-y sensor **523** may detect movement or a position of the carrier **340**. The OIS-y sensor **523** may detect movement or a position of the lens. The OIS-y sensor **523** may be disposed at a position corresponding to the OIS-y magnet **521**. The OIS-y sensor **523** may overlap the OIS-y magnet **521** in a direction perpendicular to the optical axis. The OIS-y sensor **523** may overlap the OIS-y magnet **521** in the x-axis direction.

The camera device may comprise an OIS-yaw driving unit **530**. The OIS-yaw driving unit **530** may move an OIS-yaw moving unit relative to a fixed unit. The OIS-yaw driving unit **530** may move a sensor base **320** in a yaw direction. The OIS-yaw driving unit **530** may move the housing **310** in the yaw direction. The OIS-yaw driving unit **530** may move the carrier **340** in the yaw direction. The OIS-yaw driving unit **530** may move an image sensor **220** and a lens in the yaw direction. The OIS-yaw driving unit **530** may tilt the image sensor **220** and the lens together about a first axis. The OIS-yaw driving unit **530** may move the sensor base **320** through an electromagnetic interaction force. The OIS-yaw driving unit **530** may comprise a magnet and a coil. The OIS-yaw driving unit **530** may comprise a driving magnet and a driving coil. The OIS-yaw driving units **530** may overlap each other in the optical axis direction.

The camera device may comprise an OIS-yaw magnet **531**. The OIS-yaw driving unit **530** may comprise the OIS-yaw magnet **531**. The OIS-yaw magnet **531** may be an "OIS-yaw magnet." The OIS-yaw magnet **531** may be disposed on the sensor base **320**. The OIS-yaw magnet **531** may be coupled to the sensor base **320**. The OIS-yaw magnet **531** may be fixed to the sensor base **320**. The OIS-yaw magnet **531** may be adhered to the sensor base **320** with an adhesive. The OIS-yaw magnet **531** may move integrally with the sensor base **320**. The OIS-yaw magnet **531** may move integrally with the image sensor **220**. The OIS-yaw magnet **531** may move integrally with the lens. The OIS-yaw magnet **531** may be disposed between the sensor base **320** and an OIS-yaw coil **532**. The OIS-yaw magnet **531** may be disposed between the housing **310** and the OIS-yaw coil **532**. The OIS-yaw magnet **531** may be disposed on the base **110**. The OIS-yaw magnet **531** may be disposed within the cover **120**.

The OIS-yaw magnet **531** may be a permanent magnet. The OIS-yaw magnet **531** may be a 4-pole magnet. The OIS-yaw magnet **531** may be a 4-pole magnetized magnet magnetized with four poles. The OIS-yaw magnet **531** may comprise a first magnet portion comprising an N-pole and an S-pole, a second magnet portion comprising an S-pole and an N-pole, and a neutral portion between the first magnet portion and the second magnet portion. A surface of the OIS-yaw magnet **531** facing the OIS-yaw coil **532** may comprise an N-pole and an S-pole.

The OIS-yaw magnet **531** may face the OIS-yaw coil **532**. The OIS-yaw magnet **531** may be opposed to the OIS-yaw coil **532**. The OIS-yaw magnet **531** may be disposed to correspond to the OIS-yaw coil **532**. The OIS-yaw magnet **531** may be disposed at a position corresponding to the OIS-yaw coil **532**. The OIS-yaw magnet **531** may interact with the OIS-yaw coil **532**. The OIS-yaw magnet **531** may electromagnetically interact with the OIS-yaw coil **532**. The OIS-yaw magnet **531** may overlap the OIS-yaw coil **532** in the optical axis direction.

The OIS-yaw magnet **531** may move. The OIS-yaw magnet **531** may move in the yaw direction. The OIS-yaw magnet **531** may move to one side in the yaw direction. The OIS-yaw magnet **531** may move to the other side in the yaw direction. When a current is applied to the OIS-yaw coil **532**, the OIS-yaw magnet **531** may move. The OIS-yaw magnet **531** may move through interaction with the OIS-yaw coil **532**. The OIS-yaw magnet **531** may move together with the sensor base **320**. The OIS-yaw magnet **531** may move together with the housing **310**. The OIS-yaw magnet **531** may move together with the carrier **340**. The OIS-yaw magnet **531** may move together with the image sensor **220**. The OIS-yaw magnet **531** may move together with the lens.

The camera device may comprise an OIS-yaw coil **532**. The OIS-yaw driving unit **530** may comprise the OIS-yaw coil **532**. The OIS-yaw coil **532** may be disposed on the fixed substrate **130**. The OIS-yaw coil **532** may be coupled to the fixed substrate **130**. The OIS-yaw coil **532** may be fixed to the fixed substrate **130**. The OIS-yaw coil **532** may be soldered to the fixed substrate **130**. The OIS-yaw coil **532** may be disposed on the base **110**. The OIS-yaw coil **532** may be coupled to the base **110**. The OIS-yaw coil **532** may be fixed to the base **110**. The OIS-yaw coil **532** may be adhered to the base **110** with an adhesive. The OIS-yaw coil **532** may be disposed on the base **110**. The OIS-yaw coil **532** may be disposed within the cover **120**.

The OIS-yaw coil **532** may be formed in a ring shape. The OIS-yaw coil **532** may comprise a first portion facing an N-pole of the OIS-yaw magnet **531**, and a second portion facing an S-pole of the OIS-yaw magnet **531**. The first portion and the second portion of the OIS-yaw coil **532** may overlap in a direction perpendicular to the optical axis.

A current may be applied to the OIS-yaw coil **532**. When a current is applied to the OIS-yaw coil **532**, an electromagnetic field may be formed around the OIS-yaw coil **532**. A forward current may be applied to the OIS-yaw coil **532**. A reverse current may be applied to the OIS-yaw coil **532**. The OIS-yaw coil **532** may move the OIS-yaw magnet **531**. The OIS-yaw coil **532** may be relatively fixed when the OIS-yaw magnet **531** moves.

The camera device may comprise an OIS-yaw sensor **533**. The OIS-yaw driving unit **530** may comprise the OIS-yaw sensor **533**. The OIS-yaw sensor **533** may be disposed on the fixed substrate **130**. The OIS-yaw sensor **533** may be coupled to the fixed substrate **130**. The OIS-yaw sensor **533** may be fixed to the fixed substrate **130**. The OIS-yaw sensor **533** may be soldered to the fixed substrate **130**. The OIS-yaw sensor **533** may be disposed on the base **110**. The OIS-yaw sensor **533** may be coupled to the base **110**. The OIS-yaw sensor **533** may be fixed to the base **110**. The OIS-yaw sensor **533** may be disposed within the OIS-yaw coil **532**. In a modified embodiment, the OIS-yaw sensor **533** may be disposed outside the OIS-yaw coil **532**. The OIS-yaw sensor **533** may be disposed on the base **110**. The OIS-yaw sensor **533** may be disposed within the cover **120**.

The OIS-yaw sensor **533** may comprise a Hall sensor. The OIS-yaw sensor **533** may detect the OIS-yaw magnet **531**. The OIS-yaw sensor **533** may detect a magnetic force of the OIS-yaw magnet **531**. The OIS-yaw sensor **533** may detect movement or a position of the sensor base **320**. The OIS-yaw sensor **533** may detect movement or a position of the housing **310**. The OIS-yaw sensor **533** may detect movement or a position of the carrier **340**. The OIS-yaw sensor **533** may detect movement or a position of the image sensor **220**. The OIS-yaw sensor **533** may detect movement or a position of the lens. The OIS-yaw sensor **533** may be disposed at a position corresponding to the OIS-yaw magnet **531**. The OIS-yaw sensor **533** may overlap the OIS-yaw magnet **531** in the optical axis direction.

The camera device may comprise an OIS-pitch driving unit **540**. The OIS-pitch driving unit **540** may move an OIS-pitch moving unit relative to a fixed unit. The OIS-pitch driving unit **540** may move the sensor base **320** in a pitch direction. The OIS-pitch driving unit **540** may move the housing **310** in the pitch direction. The OIS-pitch driving unit **540** may move the carrier **340** in the pitch direction. The OIS-pitch driving unit **540** may move the image sensor **220** and a lens in the pitch direction. The pitch driving unit **540** may tilt the image sensor **220** and the lens together about a second axis perpendicular to the first axis. The OIS-pitch driving unit **540** may move the sensor base **320** through an electromagnetic interaction force. The OIS-pitch driving unit **540** may comprise a magnet and a coil. The OIS-pitch driving unit **540** may comprise a driving magnet and a driving coil. The OIS-pitch driving units **540** may overlap each other in the optical axis direction.

The camera device may comprise an OIS-pitch magnet **541**. The OIS-pitch driving unit **540** may comprise the OIS-pitch magnet **541**. The OIS-pitch magnet **541** may be an "OIS-pitch magnet." The OIS-pitch magnet **541** may be disposed on the sensor base **320**. The OIS-pitch magnet **541** may be coupled to the sensor base **320**. The OIS-pitch magnet **541** may be fixed to the sensor base **320**. The OIS-pitch magnet **541** may be adhered to the sensor base **320** with an adhesive. The OIS-pitch magnet **541** may move integrally with the sensor base **320**. The OIS-pitch magnet **541** may move integrally with the image sensor **220**. The OIS-pitch magnet **541** may move integrally with the lens. The OIS-pitch magnet **541** may be disposed between the sensor base **320** and an OIS-pitch coil **542**. The OIS-pitch magnet **541** may be disposed between the housing **310** and the OIS-pitch coil **542**. The OIS-pitch magnet **541** may be disposed on the base **110**. The OIS-pitch magnet **541** may be disposed within the cover **120**.

The OIS-pitch magnet **541** may be a permanent magnet. The OIS-pitch magnet **541** may be a 4-pole magnet. The OIS-pitch magnet **541** may be a 4-pole magnetized magnet magnetized with four poles. The OIS-pitch magnet **541** may comprise a first magnet portion comprising an N-pole and an S-pole, a second magnet portion comprising an S-pole and an N-pole, and a neutral portion between the first magnet portion and the second magnet portion. A surface of the OIS-pitch magnet **541** facing the OIS-pitch coil **542** may comprise an N-pole and an S-pole.

The OIS-pitch magnet **541** may face the OIS-pitch coil **542**. The OIS-pitch magnet **541** may be opposed to the OIS-pitch coil **542**. The OIS-pitch magnet **541** may be disposed to correspond to the OIS-pitch coil **542**. The OIS-pitch magnet **541** may be disposed at a position corresponding to the OIS-pitch coil **542**. The OIS-pitch magnet **541** may interact with the OIS-pitch coil **542**. The OIS-pitch magnet **541** may electromagnetically interact with the OIS-pitch coil **542**. The OIS-pitch magnet **541** may overlap the OIS-pitch coil **542** in the optical axis direction.

The OIS-pitch magnet **541** may move. The OIS-pitch magnet **541** may move in the pitch direction. The OIS-pitch magnet **541** may move to one side in the pitch direction. The OIS-pitch magnet **541** may move to the other side in the pitch direction. When a current is applied to the OIS-pitch coil **542**, the OIS-pitch magnet **541** may move. The OIS-pitch magnet **541** may move through interaction with the OIS-pitch coil **542**. The OIS-pitch magnet **541** may move together with the sensor base **320**. The OIS-pitch magnet **541** may move together with the housing **310**. The OIS-pitch magnet **541** may move together with the carrier **340**. The OIS-pitch magnet **541** may move together with the image sensor **220**. The OIS-pitch magnet **541** may move together with the lens.

The camera device may comprise an OIS-pitch coil **542**. The OIS-pitch driving unit **540** may comprise the OIS-pitch coil **542**. The OIS-pitch coil **542** may be disposed on the fixed substrate **130**. The OIS-pitch coil **542** may be coupled to the fixed substrate **130**. The OIS-pitch coil **542** may be fixed to the fixed substrate **130**. The OIS-pitch coil **542** may be soldered to the fixed substrate **130**. The OIS-pitch coil **542** may be disposed on the base **110**. The OIS-pitch coil **542** may be coupled to the base **110**. The OIS-pitch coil **542** may be fixed to the base **110**. The OIS-pitch coil **542** may be adhered to the base **110** with an adhesive. The OIS-pitch coil **542** may be disposed on the base **110**. The OIS-pitch coil **542** may be disposed within the cover **120**.

The OIS-pitch coil **542** may be formed in a ring shape. The OIS-pitch coil **542** may comprise a first portion facing an N-pole of the OIS-pitch magnet **541**, and a second portion facing an S-pole of the OIS-pitch magnet **541**. The first portion and the second portion of the OIS-pitch coil **542** may overlap in a direction perpendicular to the optical axis.

A current may be applied to the OIS-pitch coil **542**. When a current is applied to the OIS-pitch coil **542**, an electromagnetic field may be formed around the OIS-pitch coil **542**. A forward current may be applied to the OIS-pitch coil **542**. A reverse current may be applied to the OIS-pitch coil **542**. The OIS-pitch coil **542** may move the OIS-pitch magnet **541**. The OIS-pitch coil **542** may be relatively fixed when the OIS-pitch magnet **541** moves.

The camera device may comprise an OIS-pitch sensor **543**. The OIS-pitch driving unit **540** may comprise the OIS-pitch sensor **543**. The OIS-pitch sensor **543** may be disposed on the fixed substrate **130**. The OIS-pitch sensor **543** may be coupled to the fixed substrate **130**. The OIS-pitch sensor **543** may be fixed to the fixed substrate **130**. The OIS-pitch sensor **543** may be soldered to the fixed substrate **130**. The OIS-pitch sensor **543** may be disposed on the base **110**. The OIS-pitch sensor **543** may be coupled to the base **110**. The OIS-pitch sensor **543** may be fixed to the base **110**. The OIS-pitch sensor **543** may be disposed within the OIS-pitch coil **542**. In a modified embodiment, the OIS-pitch sensor **543** may be disposed outside the OIS-pitch coil **542**. The OIS-pitch sensor **543** may be disposed on the base **110**. The OIS-pitch sensor **543** may be disposed within the cover **120**.

The OIS-pitch sensor **543** may comprise a Hall sensor. The OIS-pitch sensor **543** may detect the OIS-pitch magnet **541**. The OIS-pitch sensor **543** may detect a magnetic force of the OIS-pitch magnet **541**. The OIS-pitch sensor **543** may detect movement or a position of the sensor base **320**. The OIS-pitch sensor **543** may detect movement or a position of the housing **310**. The OIS-pitch sensor **543** may detect movement or a position of the carrier **340**. The OIS-pitch sensor **543** may detect movement or a position of the image sensor **220**. The OIS-pitch sensor **543** may detect movement or a position of the lens. The OIS-pitch sensor **543** may be disposed at a position corresponding to the OIS-pitch magnet **541**. The OIS-pitch sensor **543** may overlap the OIS-pitch magnet **541** in the optical axis direction.

The camera device may comprise an OIS driver IC **550**. The OIS driver IC **550** may apply a current to an OIS coil. The OIS driver IC **550** may apply a current to the OIS-x coil **512**, the OIS-y coil **522**, the OIS-yaw coil **532**, and the OIS-pitch coil **542**. The OIS driver IC **550** may be electrically connected to the OIS-x coil **512**, the OIS-y coil **522**, the OIS-yaw coil **532**, and the OIS-pitch coil **542**.

The OIS driver IC **550** may comprise a plurality of driver ICs. The OIS driver IC **550** may comprise two driver ICs. The OIS driver IC **550** may comprise first and second driver ICs. One driver IC may operate up to three channels. In the present embodiment, each of the first and second driver ICs may use two channels. More specifically, the first driver IC may be electrically connected to the OIS-x coil **512** and the OIS-y coil **522**. The second driver IC may be electrically connected to the OIS-yaw coil **532** and the OIS-pitch coil **542**.

In a modified embodiment, the camera device may comprise an OIS-roll driving unit. The OIS-roll driving unit may rotate the lens about the optical axis. The OIS-roll driving unit may comprise a magnet and a coil.

The camera device may comprise a guide member. The guide member may guide movement of a moving unit. The guide member may guide the movement of the moving unit in a specific direction relative to a fixed unit. The guide member may comprise a ball.

The camera device may comprise an AF guide ball **610**. The AF guide ball **610** may be disposed in the carrier **340**. The AF guide ball **610** may be disposed in a groove of the carrier **340**. The AF guide ball **610** may be disposed in the housing **310**. The AF guide ball **610** may be disposed in a groove of the housing **310**. The AF guide ball **610** may be disposed between the carrier **340** and the housing **310**. The AF guide ball **610** may be disposed between the groove of the carrier **340** and the groove of the housing **310**. The AF guide ball **610** may be in contact with the carrier **340** and the housing **310**. The AF guide ball **610** may be in direct contact with the carrier **340** and the housing **310**. The AF guide ball **610** may connect the carrier **340** and the housing **310**. The AF guide ball **610** may directly connect the carrier **340** and the housing **310**.

The AF guide ball **610** may rolling-move in the optical axis direction. The AF guide ball **610** may rolling-move in the optical axis direction within the groove of the carrier **340**. The AF guide ball **610** may rolling-move in the optical axis direction within the groove of the housing **310**. The AF guide ball **610** may guide movement of the carrier **340** in the optical axis direction. The AF guide ball **610** may guide the carrier **340** to move in the optical axis direction relative to the housing **310**.

The AF guide ball **610** may be formed in a spherical shape. In a modified embodiment, the AF guide ball **610** may be formed in a cylindrical shape. The AF guide ball **610** may comprise a curved surface. The AF guide ball **610** may comprise a plurality of balls. The AF guide ball **610** may comprise four balls. The AF guide ball **610** may comprise first to fourth balls. The AF guide ball **610** may comprise two balls disposed on one side of the AF magnet **410** and two balls disposed on the other side of the AF magnet **410**.

The camera device may comprise an OIS-x guide ball **620**. The OIS-x guide ball **620** may be disposed in the housing **310**. The OIS-x guide ball **620** may be disposed in a groove of the housing **310**. The OIS-x guide ball **620** may be disposed in the frame **330**. The OIS-x guide ball **620** may be disposed in a groove of the frame **330**. The OIS-x guide ball **620** may be disposed between the housing **310** and the frame **330**. The OIS-x guide ball **620** may be disposed between the groove of the housing **310** and the groove of the frame **330**. The OIS-x guide ball **620** may be in contact with the housing **310** and the frame **330**. The OIS-x guide ball **620** may be in direct contact with the housing **310** and the frame **330**. The OIS-x guide ball **620** may connect the housing **310** and the frame **330**. The OIS-x guide ball **620** may directly connect the housing **310** and the frame **330**.

The OIS-x guide ball **620** may rolling-move in the x-axis direction. The OIS-x guide ball **620** may rolling-move in the x-axis direction within the groove of the housing **310**. The OIS-x guide ball **620** may rolling-move in the x-axis direction within the groove of the frame **330**. The OIS-x guide ball **620** may guide movement of the housing **310** in the x-axis direction. The OIS-x guide ball **620** may guide the housing **310** to move in the x-axis direction relative to the frame **330**. The OIS-x guide ball **620** may guide movement of the carrier **340** in the x-axis direction. The OIS-x guide ball **620** may guide movement of the lens in the x-axis direction.

The OIS-x guide ball **620** may be formed in a spherical shape. In a modified embodiment, the OIS-x guide ball **620** may be formed in a cylindrical shape. The OIS-x guide ball **620** may comprise a curved surface. The OIS-x guide ball **620** may comprise a plurality of balls. The OIS-x guide ball **620** may comprise four balls. The OIS-x guide ball **620** may comprise first to fourth balls.

The camera device may comprise an OIS-y guide ball **630**. The OIS-y guide ball **630** may be disposed in the frame **330**. The OIS-y guide ball **630** may be disposed in a groove of the frame **330**. The OIS-y guide ball **630** may be disposed in the sensor base **320**. The OIS-y guide ball **630** may be disposed in a groove of the sensor base **320**. The OIS-y guide ball **630** may be disposed between the frame **330** and the sensor base **320**. The OIS-y guide ball **630** may be disposed between the groove of the frame **330** and the groove of the sensor base **320**. The OIS-y guide ball **630** may be in contact with the frame **330** and the sensor base **320**. The OIS-y guide ball **630** may be in direct contact with the frame **330** and the sensor base **320**. The OIS-y guide ball **630** may connect the frame **330** and the sensor base **320**. The OIS-y guide ball **630** may directly connect the frame **330** and the sensor base **320**.

The OIS-y guide ball **630** may rolling-move in the y-axis direction. The OIS-y guide ball **630** may rolling-move in the y-axis direction within the groove of the frame **330**. The OIS-y guide ball **630** may rolling-move in the y-axis direction within the groove of the sensor base **320**. The OIS-y guide ball **630** may guide movement of the frame **330** in the y-axis direction. The OIS-y guide ball **630** may guide the frame **330** to move in the y-axis direction relative to the sensor base **320**. The OIS-y guide ball **630** may guide movement of the housing **310** in the y-axis direction. The OIS-y guide ball **630** may guide movement of the carrier **340** in the y-axis direction. The OIS-y guide ball **630** may guide movement of the lens in the y-axis direction.

The OIS-y guide ball **630** may be formed in a spherical shape. In a modified embodiment, the OIS-y guide ball **630** may be formed in a cylindrical shape. The OIS-y guide ball **630** may comprise a curved surface. The OIS-y guide ball **630** may comprise a plurality of balls. The OIS-y guide ball **630** may comprise four balls. The OIS-y guide ball **630** may comprise first to fourth balls.

In a modified embodiment, the OIS-x guide ball **620** and the OIS-y guide ball **630** may not be distinguished, and an OIS guide ball may guide both the x-axis direction and the y-axis direction.

The camera device may comprise an OIS-yaw guide ball **640**. The OIS-yaw guide ball **640** may be disposed in a moving plate **660**. The OIS-yaw guide ball **640** may be disposed in a groove of the moving plate **660**. The OIS-yaw guide ball **640** may be disposed in the base **110**. The OIS-yaw guide ball **640** may be disposed in a groove of the base **110**. The OIS-yaw guide ball **640** may be disposed between the moving plate **660** and the base **110**. The OIS-yaw guide ball **640** may be disposed between the groove of the moving plate **660** and the groove of the base **110**. The OIS-yaw guide ball **640** may be in contact with the moving plate **660** and the base **110**. The OIS-yaw guide ball **640** may be in direct contact with the moving plate **660** and the base **110**. The OIS-yaw guide ball **640** may connect the moving plate **660** and the base **110**. The OIS-yaw guide ball **640** may directly connect the moving plate **660** and the base **110**. The OIS-yaw guide ball **640** may be formed integrally with the moving plate **660**. The OIS-yaw guide ball **640** may be formed in a hemispherical shape in the moving plate **660**. The OIS-yaw guide ball **640** may be formed as a convex portion in the moving plate **660**.

The OIS-yaw guide ball **640** may rolling-move in the yaw direction. The OIS-yaw guide ball **640** may rolling-move in the yaw direction within the groove of the moving plate **660**. The OIS-yaw guide ball **640** may rolling-move in the yaw direction within the groove of the base **110**. The OIS-yaw guide ball **640** may guide movement of the moving plate **660** in the yaw direction. The OIS-yaw guide ball **640** may guide the moving plate **660** to move in the yaw direction relative to the base **110**.

The camera device may comprise an OIS-pitch guide ball **650**. The OIS-pitch guide ball **650** may be disposed in the sensor base **320**. The OIS-pitch guide ball **650** may be disposed in a groove of the sensor base **320**. The OIS-pitch guide ball **650** may be disposed in the moving plate **660**. The OIS-pitch guide ball **650** may be disposed in a groove of the moving plate **660**. The OIS-pitch guide ball **650** may be disposed between the sensor base **320** and the moving plate **660**. The OIS-pitch guide ball **650** may be disposed between the groove of the sensor base **320** and the groove of the moving plate **660**. The OIS-pitch guide ball **650** may be in contact with the sensor base **320** and the moving plate **660**. The OIS-pitch guide ball **650** may be in direct contact with the sensor base **320** and the moving plate **660**. The OIS-pitch guide ball **650** may connect the sensor base **320** and the moving plate **660**. The OIS-pitch guide ball **650** may directly connect the sensor base **320** and the moving plate **660**.

The OIS-pitch guide ball **650** may rolling-move in the pitch direction. The OIS-pitch guide ball **650** may rolling-move in the pitch direction within the groove of the sensor base **320**. The OIS-pitch guide ball **650** may rolling-move in the pitch direction within the groove of the moving plate **660**. The OIS-pitch guide ball **650** may guide movement of the sensor base **320** in the pitch direction. The OIS-pitch guide ball **650** may guide the sensor base **320** to move in the pitch direction relative to the moving plate **660**.

Both the OIS-yaw guide ball **640** and the OIS-pitch guide ball **650** may be formed integrally with the moving plate **660**. Alternatively, only one of the OIS-yaw guide ball **640** and the OIS-pitch guide ball **650** may be formed integrally with the moving plate **660**.

The OIS-pitch guide ball **650** may guide movement of the sensor base **320** in the pitch direction. The OIS-pitch guide ball **650** may guide the sensor base **320** to move in the pitch direction relative to the moving plate **660**. The OIS-pitch guide ball **650** may guide movement of the sensor base **320** in the pitch direction. The OIS-pitch guide ball **650** may guide movement of the image sensor **220** in the pitch direction. The OIS-pitch guide ball **650** may guide movement of the housing **310** in the pitch direction. The OIS-pitch guide ball **650** may guide movement of the carrier **340** in the pitch direction. The OIS-pitch guide ball **650** may guide movement of the lens in the pitch direction.

The OIS-pitch guide ball **650** may be formed in a spherical shape. In a modified embodiment, the OIS-pitch guide ball **650** may be formed in a cylindrical shape. The OIS-pitch guide ball **650** may comprise a curved surface. The OIS-pitch guide ball **650** may comprise a plurality of balls. The OIS-pitch guide ball **650** may comprise two balls. The OIS-pitch guide ball **650** may comprise first and second balls. The OIS-pitch guide ball **650** may comprise a plurality of balls disposed on the second axis. At this time, the second axis may be a central axis in the pitch direction.

The camera device may comprise a moving plate **660**. The moving plate **660** may be disposed between the base **110** and the sensor base **320**. The moving plate **660** may be disposed on the base **110**. The moving plate **660** may be disposed below the sensor base **320**. The moving plate **660** may be disposed below the housing **310**. The moving plate **660** may be disposed below the carrier **340**.

The camera device may comprise a ball-pressing member. The ball-pressing member may press the guide ball to be in close contact with adjacent members. Since the state in which the ball is in close contact with the adjacent members is maintained by the ball-pressing member, the guide ball may guide movement of the adjacent members in a preset direction. In addition, a phenomenon in which the guide ball is lost may be prevented by the ball-pressing member. The ball-pressing member may comprise an AF guide ball pressing member. The ball-pressing member may comprise an OIS-x guide ball pressing member. The ball-pressing member may comprise an OIS-y guide ball pressing member. The ball-pressing member may comprise an OIS-yaw guide ball pressing member. The ball-pressing member may comprise an OIS-pitch guide ball pressing member.

The camera device may comprise an AF attractive force yoke **710**. The AF guide ball pressing member may comprise the AF attractive force yoke **710**. The AF attractive force yoke **710** may be disposed in the sensor substrate **210**. The AF attractive force yoke **710** may be coupled to the sensor substrate **210**. The AF attractive force yoke **710** may be fixed to the sensor substrate **210**. The AF attractive force yoke **710** may be adhered to the sensor substrate **210** with an adhesive. The AF attractive force yoke **710** may be disposed in a side substrate 211a. The AF coil **420** may be disposed between the AF attractive force yoke **710** and the AF magnet **410**. The AF attractive force yoke **710** may overlap the AF magnet **410** in a direction perpendicular to the optical axis. The AF attractive force yoke **710** may overlap the AF magnet **410** in the y-axis direction.

The AF attractive force yoke **710** may be formed of metal. The AF attractive force yoke **710** may have magnetism. The AF attractive force yoke **710** may be a magnetic member. The AF attractive force yoke **710** may be disposed to correspond to the AF magnet **410**. The AF attractive force yoke **710** may be disposed at a position corresponding to the AF magnet **410**. An attractive force may act between the AF attractive force yoke **710** and the AF magnet **410**. The AF attractive force yoke **710** may be disposed such that an attractive force acts with the AF magnet **410**.

The camera device may comprise an OIS-x attractive force yoke **720**. An OIS-x guide ball pressing member may comprise the OIS-x attractive force yoke **720**. The OIS-x attractive force yoke **720** may be disposed in the sensor base **320**. The OIS-x attractive force yoke **720** may be coupled to the sensor base **320**. The OIS-x attractive force yoke **720** may be fixed to the sensor base **320**. The OIS-x attractive force yoke **720** may be adhered to the sensor base **320** with an adhesive. The OIS-x attractive force yoke **720** may overlap the OIS-x magnet **511** in the optical axis direction.

The OIS-x attractive force yoke **720** may be formed of metal. The OIS-x attractive force yoke **720** may have magnetism. The OIS-x attractive force yoke **720** may be a magnetic member. The OIS-x attractive force yoke **720** may be disposed to correspond to the OIS-x magnet **511**. The OIS-x attractive force yoke **720** may be disposed at a position corresponding to the OIS-x magnet **511**. An attractive force may act between the OIS-x attractive force yoke **720** and the OIS-x magnet **511**. The OIS-x attractive force yoke **720** may be disposed such that an attractive force acts with the OIS-x magnet **511**.

The camera device may comprise an OIS-y attractive force yoke **730**. An OIS-y guide ball pressing member may comprise the OIS-y attractive force yoke **730**. The OIS-y attractive force yoke **730** may be disposed in the sensor base **320**. The OIS-y attractive force yoke **730** may be coupled to the sensor base **320**. The OIS-y attractive force yoke **730** may be fixed to the sensor base **320**. The OIS-y attractive force yoke **730** may be adhered to the sensor base **320** with an adhesive. The OIS-y attractive force yoke **730** may overlap the OIS-y magnet **521** in the optical axis direction.

The OIS-y attractive force yoke **730** may be formed of metal. The OIS-y attractive force yoke **730** may have magnetism. The OIS-y attractive force yoke **730** may be a magnetic member. The OIS-y attractive force yoke **730** may be disposed to correspond to the OIS-y magnet **521**. The OIS-y attractive force yoke **730** may be disposed at a position corresponding to the OIS-y magnet **521**. An attractive force may act between the OIS-y attractive force yoke **730** and the OIS-y magnet **521**. The OIS-y attractive force yoke **730** may be disposed such that an attractive force acts with the OIS-y magnet **521**.

The camera device may comprise a first repulsive force magnet **740**. The first repulsive force magnet **740** may be disposed in the base **110**. The first repulsive force magnet **740** may be coupled to the base **110**. The first repulsive force magnet **740** may be fixed to the base **110**. The first repulsive force magnet **740** may be adhered to the base **110** with an adhesive.

The first repulsive force magnet **740** may have magnetism. The first repulsive force magnet **740** may be a magnetic member. The first repulsive force magnet **740** may be disposed to correspond to a second repulsive force magnet **750**. The first repulsive force magnet **740** may be disposed at a position corresponding to the second repulsive force magnet **750**. A repulsive force may act between the first repulsive force magnet **740** and the second repulsive force magnet **750**. The first repulsive force magnet **740** may be disposed such that a repulsive force acts with the second repulsive force magnet **750**.

The camera device may comprise the second repulsive force magnet **750**. The second repulsive force magnet **750** may be disposed in the sensor base **320**. The second repulsive force magnet **750** may be coupled to the sensor base **320**. The second repulsive force magnet **750** may be fixed to the sensor base **320**. The second repulsive force magnet **750** may be adhered to the sensor base **320** with an adhesive.

The second repulsive force magnet **750** may have magnetism. The second repulsive force magnet **750** may be a magnetic member. The second repulsive force magnet **750** may overlap the first repulsive force magnet **740** in the optical axis direction. A repulsive force may act between the second repulsive force magnet **750** and the first repulsive force magnet **740**. The second repulsive force magnet **750** may be disposed below the first repulsive force magnet **740**. Through this, the sensor base **320** may be pressed toward the base **110** side by the repulsive force between the first repulsive force magnet **740** and the second repulsive force magnet **750**. That is, the OIS-yaw guide ball **640** and the OIS-pitch guide ball **650** may be pressed between the sensor base **320** and the base **110** by the repulsive force between the first repulsive force magnet **740** and the second repulsive force magnet **750**. The first repulsive force magnet **740** and the second repulsive force magnet **750** may be disposed such that like poles face each other. The first repulsive force magnet **740** and the second repulsive force magnet **750** may be disposed such that N-poles face each other. Alternatively, the first repulsive force magnet **740** and the second repulsive force magnet **750** may be disposed such that S-poles face each other.

A first surface of the first repulsive force magnet **740** and a first surface of the second repulsive force magnet **750** may be disposed to face each other. At this time, an area of the first surface of the second repulsive force magnet **750** may be larger than an area of the first surface of the first repulsive force magnet **740**. A size of the second repulsive force magnet **750** may be larger than a size of the first repulsive force magnet **740**. The size of the second repulsive force magnet **750** may be different from the size of the first repulsive force magnet **740**.

The first repulsive force magnet **740** may be directly disposed in the base **110**, and the second repulsive force magnet **750** may be directly disposed in the sensor base **320**. In a modified embodiment, at least one of the first repulsive force magnet **740** and the second repulsive force magnet **750** may be coupled to the base **110** and the sensor base **320** through a separate injection-molded product.

In a modified embodiment, the first repulsive force magnet **740** may be disposed in the sensor base **320**, and the second repulsive force magnet **750** may be disposed in the base **110**.

Hereinafter, the auto focus (AF) driving of the lens driving device according to the present embodiment will be described.

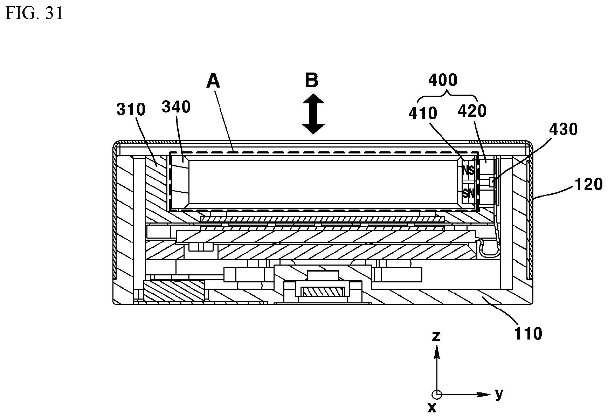

FIG. 31 is a view for explaining the auto focus driving of the camera device according to the present embodiment.

The moving unit may be disposed at a position spaced apart from both a top plate **121** of the cover **120** and the base **110** at an initial position where no current is applied to the AF coil **420**. At this time, the moving unit may comprise the carrier **340**. Furthermore, the moving unit may comprise the carrier **340**, a lens, and the AF magnet **410**.

When a current is applied to the AF coil **420**, the moving unit (refer to A of FIG. 31) may move upward or downward along the optical axis (refer to **B** of FIG. 31).

When a forward current is applied to the AF coil **420**, the AF magnet **410** may move upward in the optical axis direction by an electromagnetic interaction between the AF coil **420** and the AF magnet **410**. At this time, the carrier **340** may move upward in the optical axis direction together with the AF magnet **410**. Furthermore, the lens may move upward in the optical axis direction together with the carrier **340**. Accordingly, a distance between the lens and the image sensor **220** is changed, so that a focus of an image formed on the image sensor **220** through the lens may be adjusted.

When a reverse current is applied to the AF coil **420**, the AF magnet **410** may move downward in the optical axis direction by an electromagnetic interaction between the AF coil **420** and the AF magnet **410**. At this time, the carrier **340** may move downward in the optical axis direction together with the AF magnet **410**. Furthermore, the lens may move downward in the optical axis direction together with the carrier **340**. Accordingly, a distance between the lens and the image sensor **220** is changed, so that a focus of an image formed on the image sensor **220** through the lens may be adjusted.

Meanwhile, during a movement process of the AF magnet **410**, the AF sensor **430** may detect the intensity of a magnetic field of the AF magnet **410** to detect a movement amount or a position of the lens in the optical axis direction. The movement amount or the position of the lens in the optical axis direction detected by the AF sensor **430** may be used for auto focus feedback control.

Hereinafter, the optical image stabilization (OIS) driving of the lens driving device according to the present embodiment will be described.

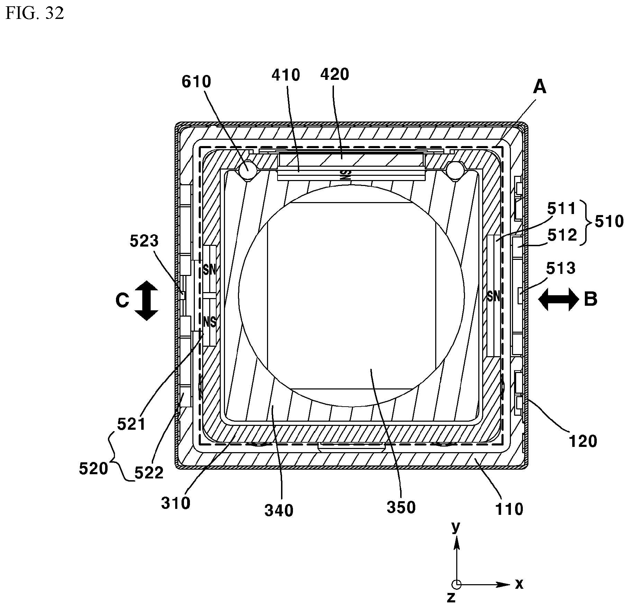

FIG. 32 is a view for explaining the optical image stabilization driving through x-axis direction shift correction and y-axis direction shift correction of the camera device according to the present embodiment.

The moving unit may be disposed at an initial position in a state where no current is applied to the OIS-x coil **512** and the OIS-y coil **522**. At this time, the moving unit may comprise the housing **310**. Furthermore, the moving unit may comprise the housing **310**, the carrier **340**, the lens, the OIS-x magnet **511**, and the OIS-y magnet **521**. The moving unit may comprise the housing **310**, the carrier **340**, the AF magnet **410**, the AF coil **420**, the lens, the filter **350**, the OIS-x magnet **511**, and the OIS-y magnet **521**.

When a current is applied to the OIS-x coil **512**, the moving unit (refer to **A** of FIG. 32) may move in the x-axis direction (refer to **B** of FIG. 32).

When a current is applied to the OIS-x coil **512**, the OIS-x magnet **511** may move in the x-axis direction perpendicular to the optical axis by an electromagnetic interaction between the OIS-x coil **512** and the OIS-x magnet **511**. At this time, the housing **310** may move in the x-axis direction together with the OIS-x magnet **511**. Furthermore, the carrier **340** and the lens may move in the x-axis direction together with the housing **310**. More specifically, when a forward current is applied to the OIS-x coil **512**, the OIS-x magnet **511**, the housing **310**, the carrier **340**, and the lens may move in one direction on the x-axis. Also, when a reverse current is applied to the OIS-x coil **512**, the OIS-x magnet **511**, the housing **310**, the carrier **340**, and the lens may move in the other direction on the x-axis.

When a current is applied to the OIS-y coil **522**, the moving unit (refer to **A** of FIG. 32) may move in the y-axis direction (refer to **C** of FIG. 32).

When a current is applied to the OIS-y coil **522**, the OIS-y magnet **521** may move in the y-axis direction perpendicular to the optical axis by an electromagnetic interaction between the OIS-y coil **522** and the OIS-y magnet **521**. At this time, the housing **310** and the frame **330** may move in the y-axis direction together with the OIS-y magnet **521**. Furthermore, the carrier **340** and the lens may move in the y-axis direction together with the housing **310**. More specifically, when a forward current is applied to the OIS-y coil **522**, the OIS-y magnet **521**, the frame **330**, the housing **310**, the carrier **340**, and the lens may move in one direction on the y-axis. Also, when a reverse current is applied to the OIS-y coil **522**, the OIS-y magnet **521**, the frame **330**, the housing **310**, the carrier **340**, and the lens may move in the other direction on the y-axis.

Meanwhile, the OIS-x sensor **513** may detect the intensity of a magnetic field of the OIS-x magnet **511** to detect a movement amount or a position of the OIS-x magnet **511**. The movement amount or the position detected by the OIS-x sensor **513** may be used for x-axis direction optical image stabilization feedback control. The OIS-y sensor **523** may detect the intensity of a magnetic field of the OIS-y magnet **521** to detect a movement amount or a position of the OIS-y magnet **521**. The movement amount or the position detected by the OIS-y sensor **523** may be used for y-axis direction optical image stabilization feedback control.

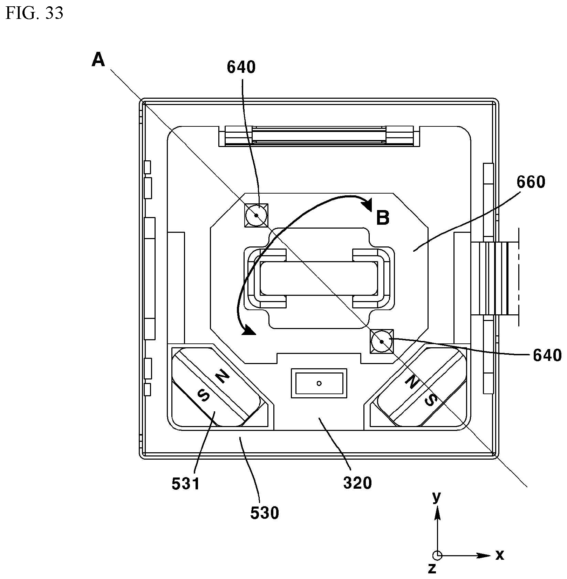

FIG. 33 is a view for explaining the optical image stabilization driving through yaw direction tilting correction of the camera device according to the present embodiment.

The moving unit may be disposed at an initial position in a state where no current is applied to the OIS-yaw coil **532**. At this time, the moving unit may comprise the image sensor **220**. Furthermore, the moving unit may comprise the moving plate **660**, the sensor base **320**, the frame **330**, the housing **310**, the carrier **340**, the image sensor **220**, and the lens.

When a current is applied to the OIS-yaw coil **532**, the moving unit may be tilted in the yaw direction (refer to **B** of FIG. 33).

When a current is applied to the OIS-yaw coil **532**, the OIS-yaw magnet **531** may be tilted in the yaw direction by an electromagnetic interaction between the OIS-yaw coil **532** and the OIS-yaw magnet **531**. That is, it may be tilted about the first axis. In other words, it may be rotated within a limited range about the first axis (refer to A of FIG. 33). At this time, the image sensor **220** and the lens may be tilted in the yaw direction together with the OIS-yaw magnet **531**. More specifically, when a forward current is applied to the OIS-yaw coil **532**, the OIS-yaw magnet **531**, the image sensor **220**, and the lens may move in one direction on the yaw. Also, when a reverse current is applied to the OIS-yaw coil **532**, the OIS-yaw magnet **531**, the image sensor **220**, and the lens may move in the other direction on the yaw.

Meanwhile, the OIS-yaw sensor **533** may detect the intensity of a magnetic field of the OIS-yaw magnet **531** to detect a movement amount or a position of the OIS-yaw magnet **531**. The movement amount or the position detected by the OIS-yaw sensor **533** may be used for yaw direction optical image stabilization feedback control.

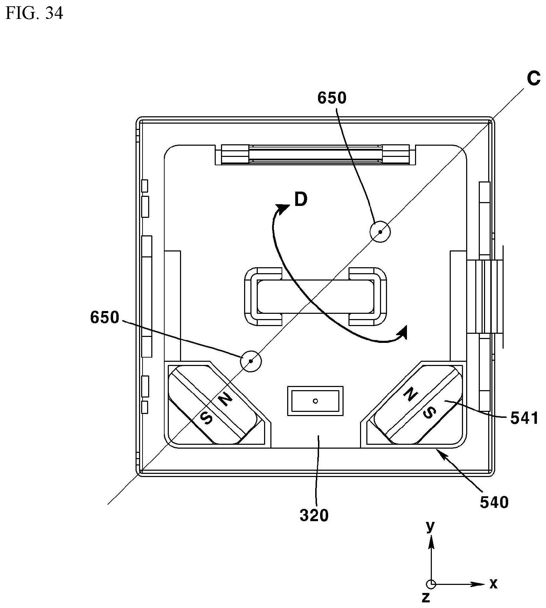

FIG. 34 is a view for explaining the optical image stabilization driving through pitch direction tilting correction of the camera device according to the present embodiment.

The moving unit may be disposed at an initial position in a state where no current is applied to the OIS-pitch coil **542**. At this time, the moving unit may comprise the image sensor **220**. Furthermore, the moving unit may comprise the sensor base **320**, the frame **330**, the housing **310**, the carrier **340**, the image sensor **220**, and the lens.

When a current is applied to the OIS-pitch coil **542**, the moving unit may be tilted in the pitch direction (refer to **D** of FIG. 34).

When a current is applied to the OIS-pitch coil **542**, the OIS-pitch magnet **541** may be tilted in the pitch direction by an electromagnetic interaction between the OIS-pitch coil **542** and the OIS-pitch magnet **541**. That is, it may be tilted about the second axis (refer to **C** of FIG. 34). In other words, it may be rotated within a limited range about the second axis. At this time, the image sensor **220** and the lens may be tilted in the pitch direction together with the OIS-pitch magnet **541**. More specifically, when a forward current is applied to the OIS-pitch coil **542**, the OIS-pitch magnet **541**, the image sensor **220**, and the lens may move in one direction on the pitch. Also, when a reverse current is applied to the OIS-pitch coil **542**, the OIS-pitch magnet **541**, the image sensor **220**, and the lens may move in the other direction on the pitch.

Meanwhile, the OIS-pitch sensor **543** may detect the intensity of a magnetic field of the OIS-pitch magnet **541** to detect a movement amount or a position of the OIS-pitch magnet **541**. The movement amount or the position detected by the OIS-pitch sensor **543** may be used for pitch direction optical image stabilization feedback control.

In the present embodiment, in the x-axis direction shift driving (refer to **A** of FIG. 10) and the y-axis direction shift driving (refer to **B** of FIG. 10), the image sensor **220** is fixed and only the lens may move. However, the yaw direction tilting (refer to **C** of FIG. 10) and the pitch direction tilting (refer to **D** of FIG. 10) may be a module tilt method in which the lens and the image sensor **220** move together.

Hereinafter, an optical apparatus according to the present embodiment will be described with reference to the drawings.

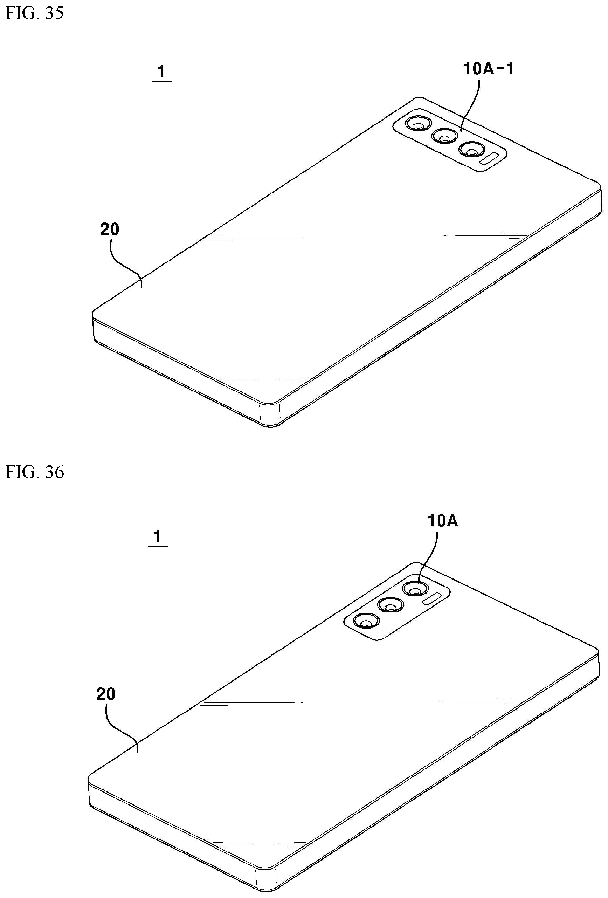

FIG. 35 is a perspective view of the optical apparatus according to the present embodiment. FIG. 36 is a perspective view of an optical apparatus according to a modified embodiment.

The optical apparatus 1 may comprise any one or more of a mobile phone, a cellular phone, a portable terminal, a mobile terminal, a smart phone, a smart pad, a portable smart device, a digital camera, a laptop computer, a digital broadcasting terminal, a PDA (Personal Digital Assistants), a PMP (Portable Multimedia Player), and navigation. The optical apparatus **1** may comprise any device for capturing a video or a photo.

The optical apparatus 1 may comprise a body **20**. The optical apparatus **1** may comprise a camera device **10A**. The camera device **10A** may be disposed in the body **20**. The camera device **10A** may capture a subject. The optical apparatus **1** may comprise a display. The display may be disposed in the body **20**. The display may output any one or more of a video and an image captured by the camera device **10A**. The display may be disposed on a first surface of the body **20**. The camera device **10A** may be disposed on any one or more of the first surface of the body **20** and a second surface opposite to the first surface. As shown in FIG. 35, the camera device **10A** may have triple cameras disposed in a vertical direction. As shown in FIG. 36, the camera device **10A-1** may have triple cameras disposed in a horizontal direction.

Although the embodiments of the present invention have been described above with reference to the accompanying drawings, those of ordinary skill in the art to which the present invention pertains will be able to understand that the present invention may be implemented in other specific forms without changing its technical spirit or essential features. Therefore, it should be understood that the embodiments described above are illustrative in all respects and not restrictive.

## Claims

1. A camera device comprising:
a base;
a first substrate disposed on the base;
an image sensor disposed on the first substrate;
a lens disposed on the image sensor;
a first driving unit configured to move the lens in an optical axis direction;
a second driving unit configured to tilt the image sensor and the lens together about a first axis; and
a third driving unit configured to tilt the image sensor and the lens together about a second axis perpendicular to the first axis,
wherein the first substrate comprises a body portion on which the image sensor is disposed and an extension portion extending outward from the body portion,
wherein the extension portion of the first substrate comprises a first portion and a second portion disposed to face each other, and
wherein the first portion of the first substrate and the second portion of the first substrate overlap each other in a first direction perpendicular to the optical axis direction.

2. The camera device of claim 1, wherein the extension portion of the first substrate comprises a third portion and a fourth portion disposed to face each other, and
wherein the third portion of the first substrate and the fourth portion of the first substrate overlap each other in the first direction.

3. The camera device of claim 2, wherein the first to fourth portions of the first substrate overlap each other in the first direction.

4. The camera device of claim 2, wherein at least a portion of each of the first to fourth portions of the first substrate is disposed parallel to the optical axis direction.

5. The camera device of claim 1, wherein the extension portion of the first substrate comprises a first bent portion connecting an upper end of the first portion and an upper end of the second portion, and
wherein a first stiffener having a corresponding shape is disposed on the first bent portion of the first substrate.

6. The camera device of claim 2, wherein the extension portion of the first substrate comprises a second bent portion connecting one side surface of the third portion and a side surface of the second portion, and a third bent portion connecting the other side surface of the third portion and a side surface of the fourth portion,
wherein a second stiffener having a corresponding shape is disposed on the second bent portion of the first substrate, and
wherein a third stiffener having a corresponding shape is disposed on the third bent portion of the first substrate.

7. The camera device of claim 1, wherein the base comprises a first protrusion, and
wherein at least a portion of the first protrusion is disposed between the first portion of the first substrate and the second portion of the first substrate.

8. The camera device of claim 2, wherein the base comprises a second protrusion and a third protrusion,
wherein at least a portion of the second protrusion is disposed between the second portion of the first substrate and the third portion of the first substrate, and
wherein the third protrusion is disposed between the third portion of the first substrate and the fourth portion of the first substrate.

9. The camera device of claim 1, wherein the first substrate comprises an outer side portion on which a connector connected to the outside is disposed, and
wherein the extension portion of the first substrate connects the body portion of the first substrate and the outer side portion of the first substrate.

10. The camera device of claim 1, comprising:
a sensor base disposed on the base and coupled to the body portion of the first substrate;
a first magnet disposed on the base; and
a second magnet disposed on the sensor base and disposed below the first magnet,
wherein the first magnet and the second magnet are disposed such that like poles face each other.
